# EUROPÄISCHE PATENTSCHRIFT

(11) **EP 3 350 863 B1**
(45) Veröffentlichungstag und Bekanntmachung des Hinweises auf die Patenterteilung: **06.11.2019**
(21) Anmeldenummer: 16766328.5
(22) Anmeldetag: 16.09.2016
(51) Int. Cl.: H01M 8/0206, H01M 8/0254, H01M 8/0265, H01M 8/0267, H01M 8/0271, H01M 8/247

(54) **SEPARATORPLATTE FÜR EIN ELEKTROCHEMISCHES SYSTEM**
SEPARATOR PLATE FOR AN ELECTROCHEMICAL SYSTEM
PLAQUE DE SÉPARATEUR POUR UN SYSTÈME ÉLECTROCHIMIQUE

(30) Priorität: 18.09.2015 DE 202015104973 U
(43) Veröffentlichungstag der Anmeldung: 25.07.2018
(73) Patentinhaber: REINZ-Dichtungs-GmbH, 89233 Neu-Ulm (DE)
(72) Erfinder: KUNZ, Claudia, 89073 Ulm (DE); WENZEL, Stephan, 89284 Pfaffenhofen (DE)
(74) Vertreter: Pfenning, Meinig & Partner mbB
(86) Internationale Anmeldenummer: PCT/EP2016/072073
(87) Internationale Veröffentlichungsnummer: WO 2017/046398

(56) Entgegenhaltungen:
- DE-A1-102013 208 877
- US-A1- 2009 325 036
- US-A1- 2015 132 680

## Beschreibung

Die Erfindung betrifft eine Separatorplatte für ein elektrochemisches System. Bei dem elektrochemischen System kann es sich beispielsweise um ein Brennstoffzellensystem, einen elektrochemischen Kompressor, einen Befeuchter für ein Brennstoffzellensystem oder um einen Elektrolyseur handeln.

Bekannte elektrochemische Systeme umfassen gewöhnlich eine Vielzahl von Separatorplatten, die in einem Stapel angeordnet sind, so dass je zwei benachbarte Separatorplatten eine elektrochemische Zelle oder eine Befeuchterzelle einschließen. Die Separatorplatten umfassen gewöhnlich jeweils zwei Einzelplatten, die entlang ihrer von den elektrochemischen Zellen bzw. den Befeuchterzellen abgewandten Rückseiten miteinander verbunden sind. Die Separatorplatten können z. B. der elektrischen Kontaktierung der Elektroden der einzelnen elektrochemischen Zellen (z. B. Brennstoffzellen) und/oder der elektrischen Verbindung benachbarter Zellen dienen (Serienschaltung der Zellen). Die Separatorplatten können auch zum Ableiten von Wärme dienen, die in den Zellen zwischen den Separatorplatten entsteht. Solche Abwärme kann etwa bei der Umwandlung elektrischer bzw. chemischer Energie in einer Brennstoffzelle entstehen. Bei Brennstoffzellen kommen häufig Bipolarplatten als Separatorplatten zum Einsatz.

Gewöhnlich weisen die Separatorplatten bzw. die Einzelplatten der Separatorplatten jeweils wenigstens eine Durchgangsöffnung auf. Im Separatorplattenstapel des elektrochemischen Systems bilden die fluchtend oder zumindest abschnittsweise überlappend angeordneten Durchgangsöffnungen der gestapelten Separatorplatten dann Medienkanäle zur Medienzufuhr oder zur Medienableitung. Zum Abdichten der Durchgangsöffnungen bzw. der durch die Durchgangsöffnungen der Separatorplatten gebildeten Medienkanäle weisen bekannte Separatorplatten ferner Sickenanordnungen auf, die jeweils um die Durchgangsöffnung der Separatorplatte herum angeordnet sind.

Die Einzelplatten der Separatorplatte können außerdem Kanalstrukturen zur Versorgung eines aktiven Bereichs der Separatorplatte mit einem oder mehreren Medien und/oder zum Abtransport von Medien aufweisen. Der aktive Bereich kann z. B. eine elektrochemische Zelle oder eine Befeuchterzelle einschließen oder begrenzen. Bei den Medien kann es sich beispielsweise um Brennstoffe (z. B. Wasserstoff oder Methanol), Reaktionsgase (z. B. Luft oder Sauerstoff) oder um ein Kühlmittel als zugeführte Medien und um Reaktionsprodukte und erwärmtes Kühlmittel als abgeführte Medien handeln. Bei Brennstoffzellen werden üblicherweise auf den voneinander abgewandten Oberflächen der Einzelplatten die Reaktionsmedien, d.h. Brennstoff und Reaktionsgase, geführt, während das Kühlmittel zwischen den Einzelplatten geführt wird.

Die Flanken der Sickenanordnung, die um die Durchgangsöffnung der Separatorplatte angeordnet ist, können einen oder mehrere Durchbrüche aufweisen. Diese Durchbrüche dienen dem Herstellen einer Fluidverbindung zwischen der Durchgangsöffnung der Separatorplatte und dem aktiven Bereich der Separatorplatte oder zwischen der Durchgangsöffnung der Separatorplatte und einem zwischen den Einzelplatten der Separatorplatte ausgebildeten Hohlraum. Der Hohlraum dient z. B. zum Durchleiten eines Kühlmittels zwischen den Einzelplatten der Separatorplatte.

Aus der Druckschrift DE10248531A1 oder DE102013208877A1 ist bekannt, dass die Separatorplatte bzw. wenigstens eine der Einzelplatten außerdem einen oder mehrere Leitungskanäle aufweisen kann, die sich an einer Außenseite der Sickenanordnung an die Durchbrüche in der Sickenflanke anschließen und die über die Durchbrüche in der Sickenflanke in Fluidverbindung mit einem Sickeninnenraum stehen. Das Durchführen eines Mediums durch die Sickenanordnung kann mithilfe solcher Leitungskanäle noch gezielter erfolgen. So kann die Effizienz des elektrochemischen Systems gesteigert werden.

Die Durchbrüche in den Sickenflanken bedingen jedoch notwendigerweise eine Verminderung der mechanischen Stabilität und Elastizität der Sickenanordnung. Dies fällt umso stärker ins Gewicht, je niedriger die Sickenanordnung ausgeführt ist. Zugleich ist eine möglichst geringe Höhe der Sickenanordnung jedoch vorteilhaft, um die Größe des Separatorplattenstapels zu minimieren bzw. bei gleicher Höhe des Separatorplattenstapels mehr Zellen unterzubringen.

Der vorliegenden Erfindung liegt somit die Aufgabe zugrunde, eine Separatorplatte für ein elektrochemisches System zu schaffen, die eine möglichst gute mechanische Stabilität und Kompaktheit aufweist und die eine möglichst effiziente Medienversorgung des Systems gewährleistet.

Diese Aufgabe wird gelöst durch eine Separatorplatte für ein elektrochemisches System gemäß Anspruch 1. Spezielle Ausführungsformen sind in den Unteransprüchen beschrieben.

Vorgeschlagen wird also eine Separatorplatte für ein elektrochemisches System. Die vorgeschlagene Separatorplatte umfasst wenigstens:
mindestens eine Durchgangsöffnung zur Ausbildung eines Medienkanals zur Medienzufuhr oder zur Medienableitung;
mindestens eine um die mindestens eine Durchgangsöffnung herum angeordnete Sickenanordnung zum Abdichten der Durchgangsöffnung, wobei wenigstens eine der Flanken der Sickenanordnung wenigstens einen Durchbruch zum Durchleiten eines Mediums durch die Sickenflanke aufweist; und mindestens einen Leitungskanal, der sich an einer Außenseite der Sickenanordnung an den Durchbruch in der Sickenflanke anschließt und der über den Durchbruch in der Sickenflanke in Fluidverbindung mit einem Sickeninnenraum ist. Z. B. kann die Separatorplatte pro Durchbruch jeweils genau einen Leitungskanal aufweisen, der sich an diesen Durchbruch anschließt.

Dabei ist der Leitungskanal derart ausgebildet, dass eine senkrecht zur Planflächenebene der Separatorplatte bestimmte Höhe des Leitungskanals zur Sickenanordnung hin wenigstens abschnittweise zunimmt. Die Höhe des Leitungskanals bezeichnet dabei einen Abstand des höchsten Punkts im Querschnitt des Daches des Leitungskanals von der Planflächenebene der Einzelplatte der Separatorplatte auf der zum Sickendach weisenden Oberfläche, in der der Leitungskanal ausgebildet ist oder die den Leitungskanal aufweist.

Im Umkehrschluss bedeutet dies, dass die Höhe des Leitungskanals von der Sickenanordnung weg wenigstens abschnittweise abnimmt. Hierdurch weist das Ende des Leitungskanals, das von der Sicke beabstandet ist, eine geringere Höhe auf, als dies im Stand der Technik der Fall wäre. In der Folge wirkt sich beim Verpressen der Sickenanordnung der Hebeleffekt auf den Leitungskanal nur vermindert aus, so dass das Ende oder ein sonstiger Abschnitt des Leitungskanals nur wenig entgegen der Verpressungsrichtung der Sickenanordnung verformt wird, so dass kein Abschnitt des Leitungskanals im verpressten Zustand über das Sickendach hinausragt.

Vorzugsweise schließt sich der Leitungskanal in der Weise an den Durchbruch in der Sickenflanke an, dass die Querschnittsfläche des Leitungskanals am Übergang des Leitungskanals in die Sickenflanke mit der Fläche des Durchbruchs in der Sickenflanke identisch ist und zusammenfällt. Die den Leitungskanal bildenden Kanalwände gehen also typischerweise unmittelbar an den Rändern des Durchbruchs in der Sickenflanke in die Sickenflanke über. Dabei bildet sich üblicherweise zum Übergang von den Seitenflanken des Leitungskanals zu der betreffenden Sickenflanke ebenso wie vom Kanaldach zu dieser Sickenflanke ein Radius aus. Deshalb wird vorzugsweise bei erfindungsrelevanten Höhen- und Breitenbetrachtungen nur die mittlere Hälfte, vorzugsweise das mittlere Drittel des Leitungskanals in Erstreckungsrichtung des Leitungskanals betrachtet.

Um dennoch ausreichend Medium von bzw. zur Sicke hin führen zu können, ist es bevorzugt, wenn der Leitungskanal in demselben Maße, wie er sich zur Sickenanordnung hin verschmälert, auch an Höhe zunimmt. Eine effiziente Mediendurchführung durch die Sickenflanke ist somit weiterhin gewährleistet.

Der Leitungskanal kann also derart ausgebildet sein, dass eine parallel zur Planflächenebene der Separatorplatte bestimmte Breite des Leitungskanals zur Sickenanordnung hin wenigstens abschnittweise abnimmt. Die Breite des Leitungskanals wird dabei vorzugsweise jeweils auf halber Höhe des Leitungskanals bestimmt. Die Breite des Leitungskanals wird vorzugsweise jeweils entlang einer Querschnittsfläche des Leitungskanals bestimmt, die senkrecht zur Längsrichtung des Leitungskanals oder senkrecht zur Medienfließrichtung durch den Leitungskanal ausgerichtet ist. Zumindest auf den 60% der Länge des Leitungskanals, die sich nicht unmittelbar an die Sickenanordnung anschließen, kann die Breite des Leitungskanals in Richtung der Sickenanordnung monoton abnehmen. Die Breite des Leitungskanals kann in diesem Bereich zur Sickenanordnung hin durchgehend oder wenigstens abschnittweise streng monoton abnehmen.

Insbesondere kann der Leitungskanal derart ausgebildet sein, dass sich die Querschnittsfläche des Leitungskanals wenigstens entlang der mittleren 25 Prozent, vorzugsweise des mittleren Drittels der Erstreckung des Leitungskanals höchstens um 25 Prozent, vorzugsweise höchstens um 20 Prozent ändert, vorzugsweise höchstens um 15 Prozent.

Gewöhnlich erstreckt sich der Leitungskanal von einem von der Sickenanordnung abgewandten Ende des Leitungskanals, das durch einen Einlass oder einen Auslass des Leitungskanals gegebenen ist, bis zum Durchbruch in der Sickenflanke. Der Einlass oder Auslass des Leitungskanals kann dabei beispielsweise durch eine Öffnung in der Separatorplatte in einer Lage der Separatorplatte oder an einer Innenkante, beispielsweise einer Innenkante einer Durchgangsöffnung, gebildet werden. Sind der Einlass oder Auslass eines Leitungskanals nicht als Öffnung oder an einer Innenkante ausgebildet, können sie auch von Übergängen zu anderen Strukturen gebildet sein, über die sie mit anderen Leitungskanälen kommunizieren. Üblicherweise weisen die Leitungskanäle auf der von einer Durchgangsöffnung abgewandten Seite der Sicke eine ähnliche Länge auf wie die Leitungskanäle auf der einer Durchgangsöffnung zugewandten Seite der Sicke, meist zwischen 50% und 200% von deren Länge. Anders betrachtet beträgt die Länge der Leitungskanäle üblicherweise bis zum 20-fachen der Höhe der Sicke. Auch können an der von der Durchgangsöffnung abgewandten Seite der Sicke die Leitungskanäle an ihrem Ende mit einer Stufe versehen sein, die den Übergang in eine andere Struktur darstellt. Wie bereits erwähnt, sind diese Enden der Leitungskanäle vorzugsweise mit deutlichen Radien versehen, die dem Übergang in die benachbarte Struktur dienen. Deshalb wird vorzugsweise bei erfindungsrelevanten Höhen- und Breitenbetrachtungen nur die mittlere Hälfte, vorzugsweise das mittlere Drittel des Leitungskanals betrachtet.

Der Leitungskanal kann derart ausgebildet sein, dass die Höhe des Leitungskanals entlang des Leitungskanals monoton zunimmt, vorzugsweise streng monoton. Dies gilt insbesondere für das mittlere Drittel der Länge des Leitungskanals. Die Höhe des Leitungskanals kann entlang der Erstreckung des Leitungskanals linear zunehmen. Z. B. kann der Leitungskanal derart ausgebildet sein, dass die Höhe des Leitungskanals zur Sickenanordnung hin wenigstens um 10 Prozent zunimmt, vorzugsweise wenigstens um 20 Prozent.

Um eine ausreichende mechanische Stabilität und wenig veränderte Elastizität der Sickenanordnung im Bereich des Durchbruchs in der Sickenflanke zu gewährleisten, kann der Durchbruch senkrecht zur Planflächenebene der Separatorplatte bis zu einer Höhe reichen, die bis zu 90 Prozent, vorzugsweise nur bis zu 85 Prozent, besonders vorzugsweise nur bis zu 75 Prozent der Höhe der Sickenanordnung beträgt. Vorzugsweise beziehen sich die Höhen dabei jeweils auf die Sickenanordnung im unverpressten Zustand und sind jeweils durch den Abstand des höchsten Punkts der Oberseite des Dachs der Sicke von der zum Sickendach weisenden Planflächenebene der Einzelplatte gegeben.

Ein Einlass oder Auslass des Leitungskanals am von der Sickenanordnung abgewandten Ende des Leitungskanals kann senkrecht zur Planflächenebene der Einzelplatte bis zu einer Höhe reichen, die höchstens 80 Prozent, vorzugsweise höchstens 70 Prozent der Höhe der Sickenanordnung beträgt. Wiederum sind die Höhenangaben dabei vorzugsweise auf die Sickenanordnung im unverpressten Zustand bezogen und jeweils durch den Abstand von der Planflächenebene der Einzelplatte gegeben. Vorzugsweise ist die Höhe des Leitungskanals am von der Sickenanordnung abgewandten Ende des Leitungskanals jedoch stets geringer als die Höhe des Durchbruchs in der Sickenanordnung.

Der Leitungskanal kann wenigstens abschnittweise, z. B. wenigstens entlang der mittleren 25 Prozent oder entlang des mittleren Drittels der Erstreckung des Leitungskanals, einen rechteckigen, trapezförmigen oder wenigstens teilweise abgerundeten Querschnitt aufweisen. Z. B. kann das Dach des Leitungskanals zur Sickenanordnung hin zumindest abschnittsweise eine konvexe Wölbung aufweisen. Der unmittelbare Übergang zwischen Leitungskanal und Sickenanordnung wird hingegen typischerweise eher eine leicht konkave Wölbung zeigen.

Zur Verbesserung der mechanischen Stabilität und Elastizität der Sickenanordnung kann die Sickenanordnung derart ausgebildet sein, dass sie parallel zur Planflächenebene der Platte wenigstens abschnittweise , insbesondere in solchen Bereichen, die makroskopisch betrachtet eine geradlinige Erstreckung aufweisen, wellenartig verläuft. Hierdurch ergibt sich eine vergleichbare Stabilität und Elastizität dieser Bereiche mit solchen Bereichen, die bereits aufgrund der Gesamtrichtung der Sicke eine Krümmung aufweisen, etwa in Eckbereichen. Durch den wellenartigen Verlauf kann dann eine Wellenlänge gegeben sein. Vorzugsweise erstreckt sich wenigstens ein wellenartig verlaufender Abschnitt der Sickenanordnung über wenigstens zwei Wellenlängen.

Nur in den sich unmittelbar an einen Wendepunkt des wellenartigen Verlaufs der Sickenanordnung anschließenden Bereichen herrschen an beiden Flanken der Sickenanordnung vergleichbare Verhältnisse, insbesondere auch bezüglich Elastizität und Stabilität. Es ist daher vorteilhaft, wenn der Durchbruch in der Sickenflanke, an den sich der Leitungskanal an der Außenseite der Sickenflanke anschließt, im Bereich eines Wendepunktes des wellenartig verlaufenden Abschnitts der Sickenanordnung angeordnet oder ausgebildet ist, z. B. insbesondere in denjenigen wellenartig verlaufenden Abschnitten der Sickenanordnung, in denen die Sickenanordnung makroskopisch gerade verläuft.

Soll hingegen eine maximale Länge des Leitungskanals mit vielen Gestaltungsmöglichkeiten oder eine minimale Länge des Leitungskanals mit einem geringen Druckverlust erzielt werden, so ist der Durchbruch in der Sickenflanke bevorzugt an einem (vom Leitungskanal aus gesehen) Minimum bzw. Maximum des wellenartig verlaufenden Abschnitts der Sickenanordnung angeordnet bzw. ausgebildet.

Eine die Durchgangsöffnung in der Separatorplatte begrenzende Innenkante der Separatorplatte kann ebenfalls wenigstens abschnittweise wellenartig verlaufen. Dieser wellenartig verlaufende Abschnitt der Innenkante kann zwischen dem wellenartig verlaufenden Abschnitt der Sickenanordnung und der Durchgangsöffnung angeordnet sein. Dabei kann für eine erste Wellenlänge λ₁ des wellenartig verlaufenden Abschnitts der Innenkante und für eine zweite Wellenlänge λ₂ des wellenartig verlaufenden Abschnitts der Sickenanordnung gelten: λ₂= λ₁ oder λ₂=2·λ₁. Bei λ₂= λ₁ ergeben sich überall gleiche Längen des Leitungskanals, so dass sehr homogene Verhältnisse erzielt werden. Bei λ₂=2·λ₁ ist der Abstand zwischen der Innenkante und der Sickenflanke gegenüber einem geraden Verlauf der Innenkante verkürzt, so dass der beim Verpressen der Sickenanordnung auftretende Hebeleffekt reduziert wird.

Die Separatorplatte kann als Bipolarplatte mit zwei miteinander verbundenen Einzelplatten ausgebildet sein, wobei die Sickenanordnung und der Leitungskanal in wenigstens einer der Einzelplatten ausgebildet sind. Die Separatorplatte und/oder die Einzelplatten kann/können aus Metall gebildet sein, vorzugsweise aus Edelstahl. Zur Verbesserung der Leitfähigkeit und zur Reduktion des Korrosionsrisikos können die Einzelplatten zumindest abschnittsweise beschichtet sein. Eine senkrecht zur Planflächenebene der Separatorplatte oder der Einzelplatten bestimmte Dicke der Einzelplatten kann jeweils zwischen 50 µm und 150 µm, vorzugsweise zwischen 70 µm und 110 µm betragen. Die Sickenanordnung, der Leitungskanal und die Einzelplatte, in der die Sickenanordnung und der Leitungskanal ausgebildet sind, können einteilig ausgebildet sein. Z. B. können die Sickenanordnung und der Leitungskanal in die Einzelplatte eingeformt, insbesondere eingeprägt sein.

Wenigstens eine der Flanken der Sickenanordnung kann eine Vielzahl von Durchbrüchen aufweisen, an die sich an der Außenseite der Sickenanordnung jeweils ein Leitungskanal der zuvor beschriebenen Art anschließt, der sich von der Sickenanordnung weg wenigstens abschnittweise verbreitert. Zwischen unmittelbar benachbarten Leitungskanälen oder wenigstens zwischen einigen der einander unmittelbar benachbarten Leitungskanäle kann jeweils eine stoffschlüssige Verbindung zwischen den Einzelplatten ausgebildet sein. Die stoffschlüssige Verbindung kann eine Lötverbindung, eine Klebeverbindung oder eine Schweißverbindung sein, insbesondere eine Laserschweißverbindung. Die Verbindung kann über eine durchgängige Linie oder einzelne kurze Linien oder Punkte realisiert werden. Diese stoffschlüssigen Verbindungen bewirken, dass die Einzelplatten der Sickenanordnung in einem der Sickenanordnung benachbarten Bereich der Separatorplatte senkrecht zur Planflächenebene der Separatorplatte oder der Einzelplatten nicht so stark auseinanderklaffen, wenn die Separatorplatten des Stapels senkrecht zu den Planflächenebenen der Separatorplatten entlang der Sickenanordnungen verpresst werden, als dies ohne die stoffschlüssigen Verbindungen der Fall wäre.

Die miteinander verbundenen Einzelplatten der Separatorplatte können derart ausgebildet und angeordnet sein, dass sie einen zwischen den Einzelplatten angeordneten Hohlraum zum Durchführen eines Kühlmittels einschließen. Dieser Hohlraum kann mit dem Sickeninnenraum in Fluidverbindung sein.

Wenigstens eine der Einzelplatten kann auf ihrer von der anderen Einzelplatte derselben Separatorplatte abgewandten Vorderseite eine Struktur zur Führung eines Reaktionsmediums aufweisen. Die Struktur kann z. B. eine Vielzahl von Kanälen umfassen, die in die Einzelplatte eingeprägt sind. Eine Kanalstruktur im aktiven Bereich der Separatorplatte wird auch als Flow Field bezeichnet. Zwischen dem Flow Field und der Durchgangsöffnung in der Separatorplatte kann die Einzelplatte eine weitere Kanalstruktur aufweisen, die als Verteilbereich bezeichnet wird. Die Struktur zur Führung des Reaktionsmediums ist üblicherweise an der von der Durchgangsöffnung in der Separatorplatte abgewandten Seite der Sickenanordnung angeordnet. Diese Struktur zur Führung des Reaktionsmediums kann über mindestens eine Öffnung in der Einzelplatte mit dem Sickeninnenraum in Fluidverbindung sein, z. B. über einen Durchbruch in der Sickenflanke und einen sich an den Durchbruch anschließenden Leitungskanal der zuvor beschriebenen Art. Das Reaktionsmedium wird also in der oben genannten Struktur vom Ausgang bzw. bis zum Eingang des Leitungskanals, nämlich von bzw. zur oben genannten Öffnung auf einer Außenoberfläche der Separatorplatte geführt, während es im Leitungskanal zwischen den Einzelplatten, d.h. im Innenraum der Separatorplatte, geführt wird.

Der Durchbruch in der Sickenanordnung und der sich an den Durchbruch anschließende Leitungskanal der zuvor beschriebenen Art können an einer von der Durchgangsöffnung der Separatorplatte abgewandten Flanke und/oder an einer der Durchgangsöffnung der Separatorplatte zugewandten Flanke der Sickenanordnung angeordnet sein. Vorzugsweise sind an beiden Flanken Leitungskanäle angeordnet.

Die Sickenanordnung kann wenigstens abschnittweise derart ausgebildet sein, dass die Sickenflanken mit einer senkrecht zur Planflächenebene der Separatorplatte ausgerichteten Lotrichtung jeweils einen Winkel von weniger als 70 Grad, vorzugsweise von weniger als 60 Grad, besonders vorzugsweise von weniger als 50 Grad einschließen. Das Sickendach kann zusätzlich eine konvexe Wölbung aufweisen. Bei dieser Ausgestaltung der Sickenanordnung haben die Sickenflanken eine hohe Steifigkeit, während das Sickendach elastisch und verformbar ist, insbesondere beim Verpressen der Sickenanordnung.

Eine Höhe der Sickenanordnung kann im unverpressten Zustand weniger als 800 µm, weniger als 600 µm, weniger als 500 µm, weniger als 450 µm oder weniger als 400 µm betragen. Wie zuvor ist die Höhe der Sickenanordnung durch den Abstand des höchsten Punktes des Sickendaches von der Planflächenebene der Separatorplatte oder von der Planflächenebene der jeweiligen Einzelplatte gegeben.

Vorgeschlagen wird außerdem ein elektrochemisches System mit einer Vielzahl von Separatorplatten der hier vorgeschlagenen Art. Das elektrochemische System kann z. B. ein Brennstoffzellensystem, ein elektrochemischer Kompressor, ein Befeuchter für ein Brennstoffzellensystem oder ein Elektrolyseur sein. Typischerweise sind die Separatorplatten des elektrochemischen Systems gestapelt angeordnet und derart ausgebildet, dass die Durchgangsöffnungen der Separatorplatten wenigstens einen Medienkanal bilden, der zur Zufuhr eines Mediums oder zur Ableitung eines Mediums aus dem Stapel eingerichtet ist.

Ausführungsbeispiele der Erfindung sind in den Zeichnungen dargestellt und werden anhand der nachfolgenden Beschreibung näher erläutert. Auch wenn Ecken teilweise ohne Radien dargestellt sind, weisen sie in der Praxis gewöhnlich immer zumindest kleine Radien auf. Im Folgenden werden einige Beispiele erfindungsgemäßer Separatorplatten gegeben. Dabei werden jeweils in Verbindung miteinander eine Vielzahl von vorteilhaften Merkmalen einer erfindungsgemäßen Separatorplatte dargestellt. Diese einzelnen optionalen Merkmale können jedoch nicht nur gemeinsam sondern auch einzeln oder in Kombination mit anderen optionalen Merkmalen aus anderen Beispielen die vorliegende Erfindung weiterbilden. Für gleiche oder ähnliche Elemente werden im Folgenden gleiche oder ähnliche Bezugszeichen verwendet, so dass deren Beschreibung teilweise nicht wiederholt wird. Es zeigt:
- Fig. 1: ein erfindungsgemäßes Brennstoffzellensystem mit einer Vielzahl von gestapelten Separatorplatten in perspektivischer Darstellung;
- Fig. 2: perspektivisch zwei unmittelbar benachbarte erfindungsgemäße Separatorplatten des Stapels aus Fig. 1 und eine dazwischen angeordnete Membranelektrodeneinheit;
- Fig. 3: ein weiteres Ausführungsbeispiel einer erfindungsgemäßen Separatorplatte in einer Draufsicht;
- Fig. 4a: perspektivisch eine Durchführung durch eine Sickenanordnung einer Separatorplatte mit an die Sickenanordnung sich anschließenden Leitungskanälen gemäß dem Stand der Technik;
- Fig. 4b: eine Schnittdarstellung der Sickendurchführung aus Fig. 4a;
- Fig. 5a: eine Sickendurchführung gemäß dem Stand der Technik in einer Draufsicht;
- Fign. 5b-c: Schnittdarstellungen der Sickendurchführung aus Fig. 6a, wobei Bereiche der Einzelplatten beim Verpressen der Sickenanordnung teilweise über die Sickenanordnung hinausragen;
- Fig. 6a: eine erfindungsgemäße Sickendurchführung in einer Draufsicht;
- Fign. 6b-c: Schnittdarstellungen der Sickendurchführung aus Fig. 6a, wobei die Einzelplatten infolge der erfindungsgemäßen Ausgestaltung der Leitungskanäle beim Verpressen der Sickenanordnung nicht über die Sickenanordnung hinausragen;
- Fign. 7a-e: weitere Ausführungsformen einer Sickendurchführung mit erfindungsgemäßen Leitungskanälen, jeweils in einer Draufsicht;
- Fig. 8a: perspektivisch die Sickendurchführung gemäß Fig. 6b, aufgeschnitten entlang eines erfindungsgemäßen Leitungskanals;
- Fig. 8b: perspektivisch die Sickendurchführung gemäß Fig. 6b, aufgeschnitten entlang eines Bereichs zwischen benachbarten Leitungskanälen;
- Fign. 9a-d: Schnittdarstellungen von Sickendurchführungen mit einem erfindungsgemäßen Leitungskanal, dessen Höhe zur Sickenanordnung hin wenigstens abschnittweise zunimmt;
- Fign. 10a-f: Schnittdarstellungen erfindungsgemäßer Leitungskanäle; sowie
- Fign. 11a-e: Schnittdarstellungen erfindungsgemäßer Leitungskanäle an jeweils zwei unterschiedlichen Stellen desselben Leitungskanals.

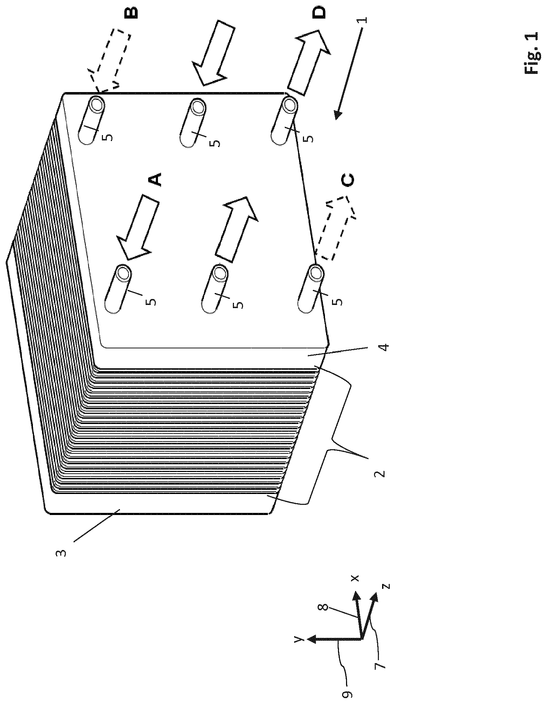

Fig. 1 zeigt ein erfindungsgemäßes elektrochemisches System 1 mit einem Stapel 2 von baugleichen Separatorplatten, die entlang einer z-Richtung 7 gestapelt und zwischen zwei Endplatten 3, 4 eingespannt sind. Die Separatorplatten sind hier als Bipolarplatten ausgebildet und umfassen jeweils zwei miteinander verbundene Einzelplatten. Im vorliegenden Beispiel handelt es sich bei dem System 1 um ein Brennstoffzellensystem. Je zwei benachbarte Bipolarplatten des Stapels 2 schließen also zwischen sich eine elektrochemische Zelle ein, die zur Umwandlung von chemischer Energie in elektrische Energie ausgebildet ist. Bei alternativen Ausführungsformen kann das System 1 ebenso als Elektrolyseur, elektrochemischer Kompressor oder als Befeuchter für ein Brennstoffzellensystem ausgebildet sein. Bei diesen elektrochemischen Systemen werden ebenfalls Separatorplatten verwendet. Der Aufbau dieser Separatorplatten entspricht dem Aufbau der hier näher erläuterten Bipolarplatten, auch wenn sich die auf bzw. durch die Separatorplatten geführten Medien unterscheiden.

Die z-Achse 7 spannt zusammen mit einer x-Achse 8 und einer y-Achse 9 ein rechtshändiges kartesisches Koordinatensystem auf. Die Endplatte 4 weist eine Vielzahl von Ports 5 auf, über die dem System 1 Medien zuführbar und über die Medien aus dem System 1 abführbar sind. Diese dem System 1 zuführbaren und aus dem System 1 abführbaren Medien können z. B. Brennstoffe wie molekularen Wasserstoff oder Methanol, Reaktionsgase wie Luft oder Sauerstoff, Reaktionsprodukte wie Wasserdampf oder an Sauerstoff verarmte Luft, oder Kühlmittel wie Wasser und/oder Glykol umfassen.

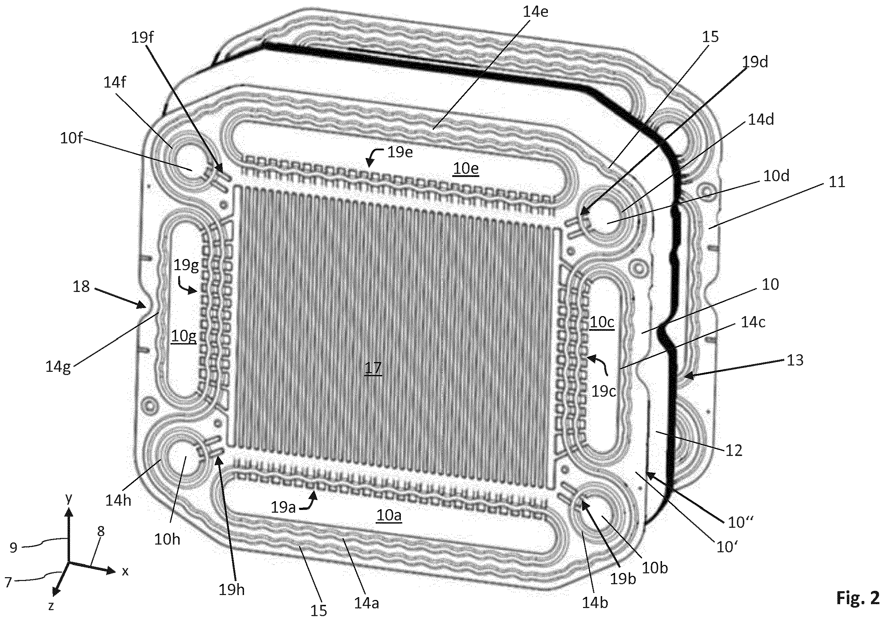

Fig. 2 zeigt zwei unmittelbar benachbarte Separatorplatten 10, 11 des Stapels 2 aus Fig. 1. Hier und im Folgenden sind wiederkehrende Merkmale dabei jeweils mit denselben Bezugszeichen bezeichnet. Die Separatorplatten 10, 11 sind identisch ausgebildet. Im Folgenden wird daher nur die Separatorplatte 10 im Detail beschrieben. Sie steht damit beispielhaft für die Separatorplatten des Stapels 2.

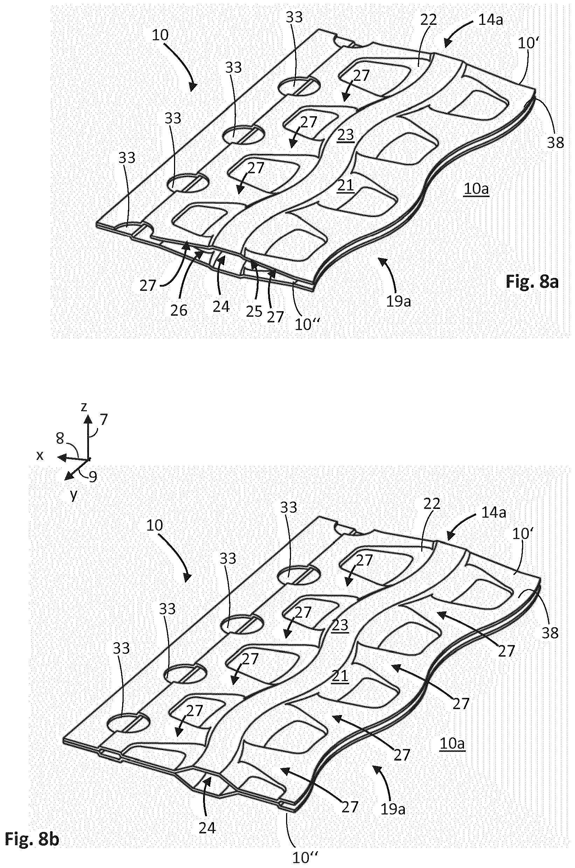

Die Planflächenebene der Separatorplatte 10 ist entlang der x-y-Ebene ausgerichtet. Hier ist die Separatorplatten 10 aus zwei zusammengefügten metallischen Einzelplatten 10', 10" gebildet (siehe auch Fign. 8a und 8b). In Fig. 2 ist jedoch nur die dem Betrachter zugewandte erste Einzelplatte 10' der Separatorplatte 10 sichtbar. Die Einzelplatten 10', 10" der Separatorplatte 10 sind aus Edelstahlblechen gefertigt, die z. B. jeweils eine senkrecht zur Planflächenebene der Einzelplatten bestimmte Dicke von 80 µm haben. Die Einzelplatten 10', 10" können zur Ausbildung der Separatorplatte 10 entlang ihrer einander zugewandten Rückseiten miteinander verschweißt, insbesondere abschnittsweise miteinander verschweißt, verlötet oder verklebt sein. Z. B. können die Einzelplatten 10', 10" durch Laserschweißverbindungen verbunden sein.

Zwischen den Separatorplatten 10, 11 ist eine Membranelektrodeneinheit (membrane electrode assembly, MEA) 12 angeordnet. Die MEA 12 kann eine Polymerelektrolytmembran (PEM) sowie eine oder mehrere Gasdiffusionslagen (GDL) aufweisen. Die GDL sind üblicherweise zu den Separatorplatten 10, 11 hin orientiert und z. B. als Kohlenstoffvlies ausgebildet. Die einander zugewandten Seiten der Separatorplatten 10, 11 schließen im verpressten Zustand eine elektrochemische Zelle 13 ein. Bei Befeuchtern für Brennstoffzellensysteme wird die Zelle 13 von einer im Wesentlichen gasundurchlässigen aber wasserdurchlässigen Membran, die von Stützmedien gestützt sein kann, sowie von mindestens einem, vorzugsweise beidseitig von je einem Diffusionsmedium aus einem Textil- oder Kohlenstoffvlies gebildet.

Die Separatorplatte 10 weist eine Vielzahl von Durchgangsöffnungen 10a-h, auf. Die MEA 12 weist entsprechende Durchgangsöffnungen auf, die mit den Durchgangsöffnungen 10a-h der Separatorplatte 10 und mit entsprechenden Durchgangsöffnungen der übrigen Separatorplatten des Stapels 2 fluchten, so dass die Durchgangsöffnungen nach dem Verpressen des Stapels 2 Medienkanäle bilden, die jeweils mit einem der Ports 5 aus Fig. 1 in Fluidverbindung sind. Diese Medienkanäle dienen der Zufuhr von Medien in das elektrochemische System 1 und der Ableitung von Medien aus dem elektrochemischen System 1.

Zum Abdichten der Durchgangsöffnungen 10a-h bzw. zum Abdichten der von den Durchgangsöffnungen 10a-h gebildeten Medienkanäle sind in der Separatorplatte 10 Sickenanordnungen ausgebildet, die um die Durchgangsöffnungen 10a-h herum angeordnet sind. So weist die von der Separatorplatte 11 abgewandte erste Einzelplatte 10' der Separatorplatte 10 um die Durchgangsöffnungen 10a-h herum Sickenanordnungen 14a-h auf. Die Sickenanordnungen 14a-h umschließen die Durchgangsöffnungen 10a-h jeweils vollständig. Die der Separatorplatte 11 zugewandte und in Fig. 2 verdeckte zweite Einzelplatte 10" der Separatorplatte 10 weist um die Durchgangsöffnungen 10a-h herum entsprechende Sickenanordnungen auf. Eine zusätzliche Sickenanordnung 15 der Separatorplatte 10 umschließt die Durchgangsöffnungen 10a-b, 10d-f und 10h vollständig.

Die Sickenanordnungen der Separatorplatte 10 sind hier jeweils einstückig mit den Einzelplatten 10', 10" ausgebildet. Üblicherweise sind die Sickenanordnungen der Einzelplatten 10', 10" in die Einzelplatten eingeformt, insbesondere eingeprägt. Senkrecht zur Planflächenebene der Einzelplatten 10', 10" haben die in den Einzelplatten ausgebildeten Sickenanordnungen im unverpressten Zustand jeweils eine Höhe von nur 450 µm oder sogar von nur 400 µm. Die Höhe der Sicke bezeichnet dabei jeweils den Abstand des höchsten Punktes des Sickendaches von der Planflächenebene der jeweiligen Einzelplatte auf der zum Sickendach weisenden Oberfläche. Diese außerordentlich geringe Sickenhöhe trägt vorteilhaft zur Kompaktheit des Stapels 2 des Systems 1 bei.

In Fig. 2 ist ferner zu erkennen, dass die erste Einzelplatte 10' der Separatorplatte 10 an ihrer von der zweiten Einzelplatte 10" der Separatorplatte 10 abgewandten Vorderseite eine Struktur 17 zur Führung von Reaktionsmedium aufweist. Die Struktur 17 umfasst eine Vielzahl von Kanälen, die in die Einzelplatte 10' eingeprägt sind. Die Struktur 17 ist allseits vollständig von der Sickenanordnung 15 umschlossen, so dass die Sickenanordnung 15 die Struktur 17 gegenüber der Umgebung abdichtet. Die Struktur 17 ist Teil eines aktiven Bereichs der Einzelplatte 10'. Dieser aktive Bereich begrenzt eine weitere elektrochemische Zelle, die zwischen der Separatorplatte 10 und einer der Separatorplatte 10 in der positiven z-Richtung 7 unmittelbar benachbarten weiteren Separatorplatte angeordnet ist, die in Fig. 2 nicht dargestellt ist. Die zweite Einzelplatte 10" der Separatorplatte 10 weist an ihrer von der ersten Einzelplatte 10' abgewandten Vorderseite eine der Struktur 17 entsprechende Struktur zum Führen von Reaktionsmedium auf.

Die Einzelplatten 10', 10" sind derart ausgebildet und angeordnet, dass sie zwischen sich einen Hohlraum 18 zum Durchführen eines Kühlmittels einschließen. Der Hohlraum 18 ist insbesondere derart zwischen den Einzelplatten 10', 10" angeordnet, dass mittels des durch den Hohlraum 18 geführten Kühlmittels Wärme aus den aktiven Bereichen der Einzelplatten 10', 10" ableitbar ist.

Die Einzelplatten 10', 10" weisen ferner Durchführungen 19a-h auf, die zum dosierten Durchführen oder Durchleiten von Medien (z. B. Brennstoffe, Reaktionsgase, Reaktionsprodukte oder Kühlmittel) durch die Sickenanordnungen 14a-h, 15 ausgebildet sind. Einige der Durchführungen 19a-h, nämlich die Durchführungen 19c und 19g, stellen eine Fluidverbindung zwischen den Durchgangsöffnungen 10c und 10g (bzw. den durch diese gebildeten Medienkanälen) und dem Hohlraum 18 zwischen den Einzelplatten 10', 10" her. Einige der Durchführungen, nämlich die Durchführungen 19a und 19e, stellen eine Fluidverbindung zwischen den Durchgangsöffnungen 10a und 10e (bzw. den durch diese gebildeten Medienkanälen) und dem dem Betrachter zugewandten Flowfield 17 des aktiven Bereichs der Einzelplatte 10'der Separatorplatte 10 her. Die übrigen Durchführungen 19b, 19d, 19f und 19h stellen eine Fluidverbindung zwischen den Durchgangsöffnungen 10b, 10d, 10f und 10h (bzw. den durch diese gebildeten Medienkanälen) und dem vom Betrachter abgewandten Flowfield des aktiven Bereichs der zweiten Einzelplatte 10" der Separatorplatte 10 her. Details der Durchführungen 19a-h werden anhand der nachfolgenden Figuren erläutert.

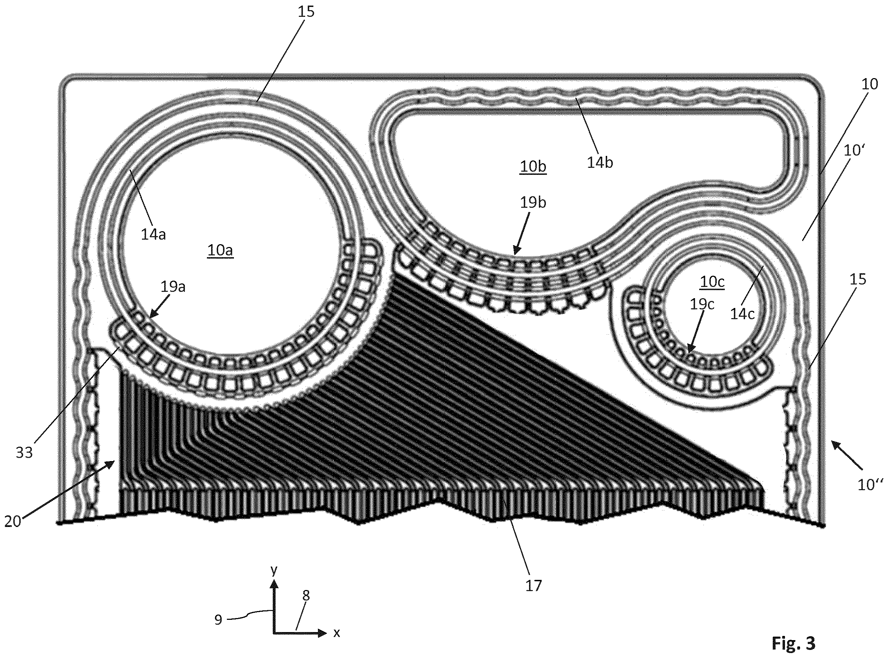

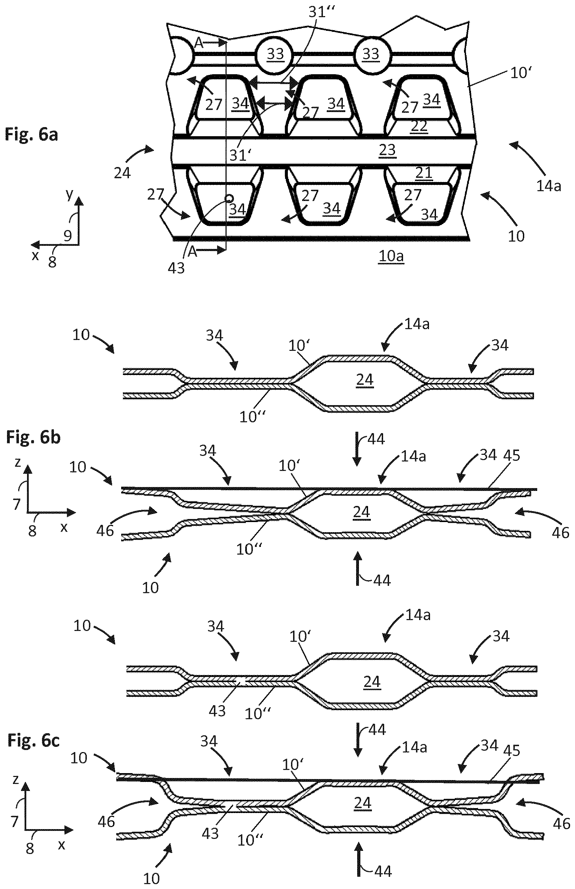

Fig. 3 zeigt eine abgewandelte Ausführungsform der Separatorplatte 10 mit den zusammengefügten metallischen Einzelplatten 10', 10". Dem Betrachter zugewandt ist die Vorderseite der ersten Einzelplatte 10'. Erkennbar sind die Durchgangsöffnungen 10a-c in der Separatorplatte 10 und die zum Abdichten der Durchgangsöffnungen 10a-c um die Durchgangsöffnungen 10a-c herum angeordneten Sickenanordnungen 14a-c, die in die erste Einzelplatte 10' eingeprägt sind. Die Sickenanordnung 15 zum Abdichten des aktiven Bereichs der ersten Einzelplatte 10' ist abschnittweise dargestellt. Die Ausführungsform der Separatorplatte 10 gemäß Fig. 3 weist zudem eine Verteilerstruktur 20 auf. Diese umfasst eine Vielzahl von in die Vorderseite der Einzelplatte 10' eingeprägten Kanälen und stellt eine Fluidverbindung zwischen der Durchgangsöffnung 10a und dem aktiven Bereich der Einzelplatte 10' her, der sich in Fig. 3 am unteren Bildrand an die Verteilerstruktur 20 anschließt. Die Sickenanordnungen 14a-c weisen wiederum Durchführungen 19a-c zum Durchführen von Medien durch die Sickenanordnungen 14a-c auf, wobei deutlich wird, dass das Medium der Durchgangsöffnung 10b - es handelt sich dabei insbesondere um Kühlmittel - sowohl die Sicke 14b als auch die Sicke 15 queren muss; es wird durchgängig auf der vom Betrachter abgewandten Seite der Einzelplatte 10' geführt. Das aus der Durchgangsöffnung 10a zwischen den Einzelplatten 10', 10" und durch die Durchführung 19a quer zur Sickenanordnung 14a geführte Medium tritt über die Öffnung 33 (siehe z. B. die Fign. 6 bis 8) in die dem Betrachter zugewandte Verteilstruktur 20 ein. Das aus der nicht sichtbaren Verteilstruktur auf der gegenüberliegenden Oberfläche der Separatorplatte 10 abgeführte Medium tritt durch eine in der zweiten Einzelplatte 10" ausgebildete Öffnung in einen Leitungskanal zwischen den Einzelplatten 10' und 10" ein, quert die Sicke 14c über die Durchführung 19c und fließt weiter in die Durchgangsöffnung 10c.

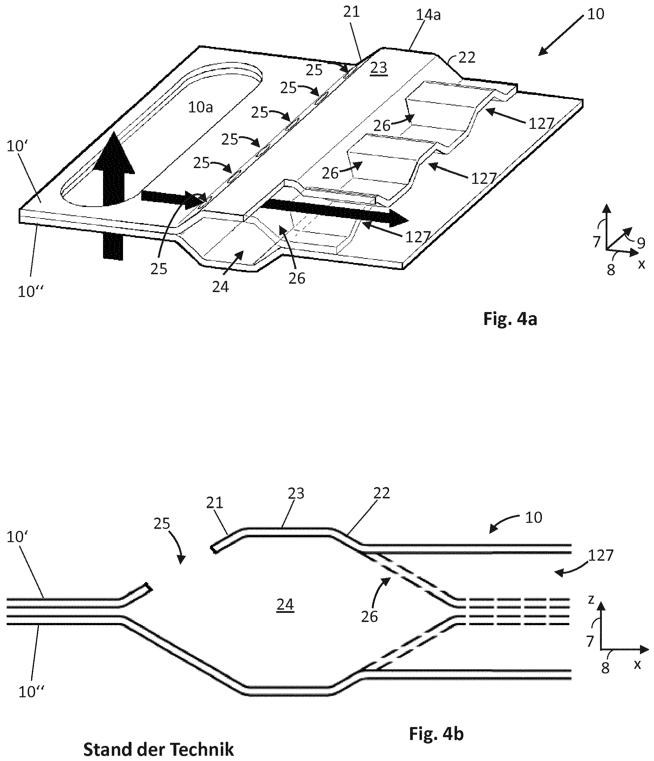

Fig. 4a zeigt einen Ausschnitt der Separatorplatte 10 in perspektivischer Darstellung. Die in die erste Einzelplatte 10' eingeprägte Sickenanordnung 14a weist zwei Sickenflanken 21, 22 sowie ein Sickendach 23 auf. Zwischen den Sickenflanken 21, 22 und dem Sickendach 23 ist an der der zweiten Einzelplatte 10" zugewandten Rückseite der Einzelplatte 10' ein Sickeninnenraum 24 angeordnet, der von den Sickenflanken 21, 22 und dem Sickendach 23 begrenzt wird. Die der Durchgangsöffnung 10a zugewandte Sickenflanke 21 weist eine Vielzahl von Durchbrüchen 25 zum Durchleiten eines Mediums durch die Sickenflanke 21 auf. Über die Durchbrüche 25 ist die Durchgangsöffnung 10a in Fluidverbindung mit dem Sickeninnenraum 24. Die von der Durchgangsöffnung 10a abgewandte Sickenflanke 22 weist Durchbrüche 26 zum Durchleiten eines Mediums durch die Sickenflanke 22 auf.

An der von der zweiten Einzelplatte 10" abgewandten Außenseite der Sickenanordnung 14a schließen sich an die Durchbrüche 26 nicht erfindungsgemäße Leitungskanäle 127 an, die über die Durchbrüche 26 mit dem Sickeninnenraum 24 in Fluidverbindung sind. Ein im Medienkanal 10a geführtes Medium kann somit über die Durchbrüche 25, den Sickeninnenraum 24, die Durchbrüche 26 und die Kanäle 127 durch die Sickenanordnung 14a hindurchgeführt und z. B. gezielt in den aktiven Bereich der Einzelplatte 10' geleitet werden, wie anhand der Pfeile angedeutet ist. Die nicht erfindungsgemäßen Leitungskanäle 127 haben eine konstante Höhe, wobei die Höhe der Leitungskanäle 127 der Einzelplatte 10' jeweils durch den entlang der z-Richtung 7 bestimmten Abstand des Kanaldaches 30 von der Planflächenebene der Einzelplatte 10' gegeben ist. Fig. 4b zeigt eine Schnittdarstellung der Sickenanordnung 14a gemäß Fig. 4a, wobei die Schnittebene entlang der x-z-Ebene ausgerichtet ist und in Längsrichtung durch einen der nicht erfindungsgemäßen Leitungskanäle 127 verläuft.

Um den Stapel 2 der Separatorplatten des Systems 1 möglichst kompakt zu gestalten, ist es wünschenswert, die Sickenanordnung 14a und die übrigen Sickenanordnungen der Separatorplatte 10 möglichst flach auszubilden. Die Durchbrüche 25, 26 in den Sickenflanken 21, 22 können jedoch die Stabilität und Elastizität und damit die Dichtwirkung der Sickenanordnung 14a beeinträchtigen. Dem könnte ggf. durch eine Verkleinerung der Durchbrüche 25, 26 abgeholfen werden. Eine solche Verkleinerung hätte aber eine ebenfalls ungewünschte Verringerung des Medienstromes durch die Sickenanordnung zur Folge.

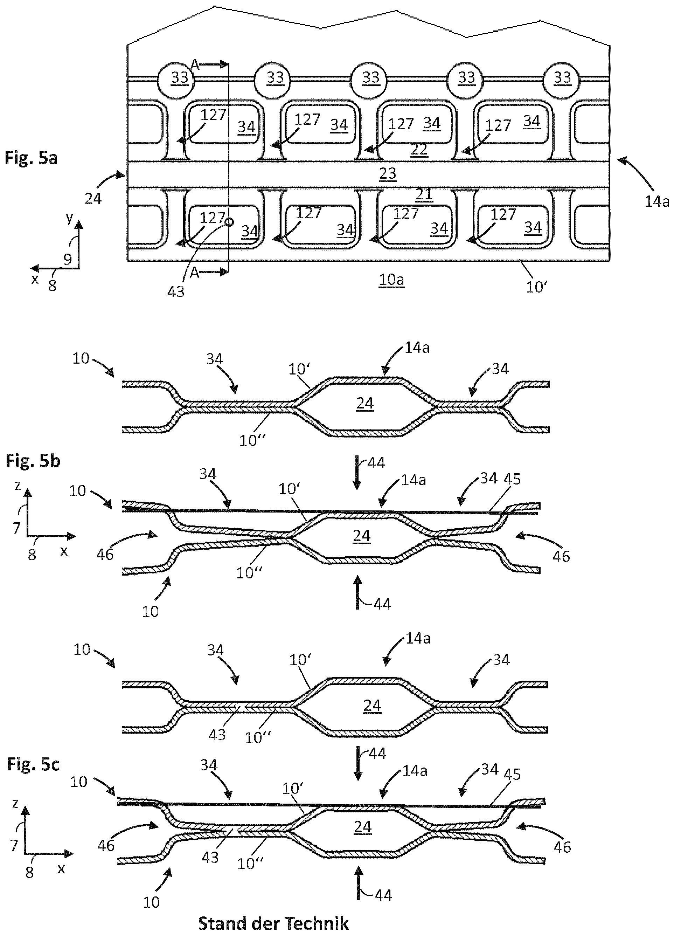

Fig. 5a zeigt eine nicht erfindungsgemäße Sickendurchführung in einer Draufsicht. Insbesondere weist die Sickendurchführung gemäß Fig. 5a nicht erfindungsgemäße Leitungskanäle 127 konstanter Höhe und konstanter Breite auf. Die Fign. 5b-c zeigen jeweils zwei Schnittdarstellungen der Anordnung gemäß Fig. 5a, wobei die Schnittebene jeweils senkrecht zur Planflächenebene der Einzelplatte 10' und senkrecht zum geraden Verlauf der Sickenanordnung 14a ausgerichtet ist. Die Schnittebene verläuft entlang der in Fig. 5a hervorgehobenen Geraden A-A. Die obere Darstellung der Fign. 5b-c zeigt die Separatorplatte 10 jeweils im unverpressten Zustand. Die untere Darstellung der Fign. 5b-c zeigt die Separatorplatte 10 jeweils im verpressten Zustand, wobei eine senkrecht zur Planflächenebene der Separatorplatte 10 bzw. senkrecht zur Planflächenebene der Einzelplatten 10', 10" auf die Sickenanordnung 14a ausgeübte Kraft durch Pfeile 44 hervorgehoben ist.

Den unteren Darstellungen der Fign. 5b-c ist entnehmbar, dass die Einzelplatten 10', 10" in von der Sickenanordnung 14a beabstandeten Bereichen 46 beim Verpressen derart auseinanderklaffen, dass die Einzelplatte 10' im Bereich 46 teilweise über die Höhe 45 der Sickenanordnung 14a hinausragt. In diesem Fall kann z. B. die zwischen benachbarten Separatorplatten des Stapels 2 angeordnete Membranelektrodeneinheit 12 beschädigt werden.

Dieser unerwünschte Effekt ist bei der Anordnung gemäß Fig. 5b besonders stark ausgeprägt. Im Ausführungsbeispiel der Fig. 5b sind keinerlei Verbindungen zwischen den beiden Einzelplatten 10', 10" der Separatorplatte 10 in den Bereichen zwischen den Kanälen 127 ausgebildet. Bei der Anordnung gemäß Fig. 5c sind in den Ebenen Bereichen 34 der Separatorplatte 10, die zwischen benachbarten Kanälen 127 angeordnet sind, teilweise stoffschlüssige Verbindungen 43 zwischen den Einzelplatten 10', 10" der Separatorplatte 10 ausgebildet. In Fig. 5a ist die Position einer dieser stoffschlüssigen Verbindungen 43 beispielhaft hervorgehoben. Z. B. kann es sich bei der stoffschlüssigen Verbindung 43 um eine Klebeverbindung, eine Lötverbindung oder eine Schweißverbindung handeln, insbesondere eine Laserschweißverbindung. Der Vergleich zwischen den Darstellungen der Fign. 5b und 5c zeigt, dass das Auseinanderklaffen der Einzelplatten 10', 10" in den Bereichen 46 beim Verpressen der Sickenanordnung 14a durch die stoffschlüssige Verbindung 43 gemäß Fig. 5c vermindert werden kann. Jedoch ist die auf die Bereiche 46 infolge der Verpressung der Sickenanordnung ausgeübte Hebelkraft auch bei der Anordnung gemäß Fig. 5c weiterhin so groß, dass die Einzelplatte 10' in den Bereichen 46 teilweise über die Höhe 45 der Sickenanordnung 14a hinausragt.

Eine erfindungsgemäße Ausgestaltung der Durchführungen 19a-h durch die Sickenanordnungen 14a-h, 15 gemäß den Fign. 2 und 3, die einen genügend großen Medienstrom durch die Sickenanordnungen 14a-h, 15 gewährleistet, ohne die Stabilität und die Elastizität der Sickenanordnungen 14a-h, 15 zu beeinträchtigen, ist im Folgenden anhand der Fign. 6-9 für die Sickendurchführung 19a durch die Sickenanordnung 14a der Einzelplatte 10' der Separatorplatte 10 beispielhaft dargestellt.

Fig. 6a zeigt also im Gegensatz zu Fig. 5a eine Ausführungsform einer erfindungsgemäßen Sickendurchführung 19a, bei der sich beiderseits der Sickenanordnung 14 eine Vielzahl erfindungsgemäßer Leitungskanäle 27 an die Sickenflanken 21, 22 anschließt. Die Leitungskanäle 27 sind wiederum über Durchbrüche 25 in der Sickenflanke 21 und über Durchbrüche 26 in der Sickenflanke 22 in Fluidverbindung mit dem Sickeninnenraum 24. Der Übersichtlichkeit halber sind die Durchbrüche 25, 26 hier nicht gesondert hervorgehoben. Wie zuvor nimmt die Höhe der Leitungskanäle 27 zur Sickenanordnung 14a hin jeweils wenigstens abschnittweise zu, hier insbesondere linear. Z. B. sind die Leitungskanäle 27 gemäß Fig. 6a jeweils ausgebildet wie die in Fig. 5a oder 5d gezeigten Leitungskanäle 27.

In Fig. 6a ist zudem erkennbar, dass eine parallel zur Planflächenebene der Einzelplatte 10' bestimmte Breite der Leitungskanäle 27 zur Sickenanordnung 14a wenigstens abschnittweise abnimmt. Hier weiten sich die Leitungskanäle 27 ausgehend von den Sickenflanken 21, 22 jeweils fächerförmig auf. Die in Fig. 6a parallel zum geraden Verlauf der Sickenanordnung 14a bestimmte Breite der Leitungskanäle 27 nimmt also zur Sickenanordnung 14a hin bereichsweise linear ab. Beispielhaft hervorgehoben sind eine erste Breite 31' eines Leitungskanals 27 in einem ersten Abstand von der Sickenanordnung 14a und eine zweite Breite 31" desselben Leitungskanals 27 in einem zweiten Abstand von der Sickenanordnung 14a, wobei der erste Abstand kleiner ist als der zweite Abstand. Die erste Breite 31' ist kleiner als die zweite Breite 32".

Die Breite der Leitungskanäle 27 nimmt zur Sickenanordnung 14a hin jeweils in etwa in demselben Maße ab, wie die Höhe der Leitungskanäle 27 zur Sickenanordnung 14a hin zunimmt, so dass eine Querschnittsfläche der Leitungskanäle entlang der Erstreckung der Leitungskanäle 27 im Wesentlichen konstant ist. Z. B. sind die Leitungskanäle 27 derart ausgebildet, dass sich ihre Querschnittsfläche wenigstens entlang der mittleren 25 Prozent des Verlaufs des Leitungskanals 27, vorzugsweise entlang des mittleren Drittels entlang ihrer Erstreckung jeweils höchstens um 20 Prozent oder höchstens um 15 Prozent ändert.

Dadurch, dass die Leitungskanäle 27 gemäß Fig. 6a derart ausgebildet sind, dass ihre Höhe von der Sickenanordnung 14a weg wenigstens abschnittweise abnimmt, wird vorteilhaft verhindert, dass die Einzelplatten 10', 10" beim Verpressen der Sickenanordnung 14a in den von der Sickenanordnung 14a beabstandeten Bereichen 46 über die Höhe 45 der Sickenanordnung 14a hinausragen. Insbesondere bedingt die erfindungsgemäße Ausgestaltung der Leitungskanäle 27 gemäß Fig. 6a, dass die Einzelplatten 10', 10" in den Bereichen 46 senkrecht zur Planflächenebene der Einzelplatten 10', 10" einen geringeren Abstand voneinander aufweisen. So wirkt die erfindungsgemäße Ausgestaltung der Leitungskanäle 27 beim Verpressen der Sickenanordnung 14a dem Auseinanderklaffen der Einzelplatten 10', 10" in den Bereichen 46 entgegen. Dadurch, dass die Leitungskanäle gemäß Fig. 6a zusätzlich derart ausgebildet sind, dass sich ihre Breite 31', 31" von der Sickenanordnung 14a weg vergrößert, wird der Fluidtransport durch den Leitungskanal nicht beeinträchtigt.

Wie bereits in Bezug auf Fig. 5c erläutert kann dem Auseinanderklaffen der Einzelplatten 10', 10" in den Bereichen 46 zusätzlich dadurch entgegengewirkt werden, dass wenigstens in einigen der Bereiche 34 zwischen benachbarten Leitungskanälen 27 bereichsweise stoffschlüssige Verbindungen ausgebildet werden. Beispielhaft ist in Fig. 6a die Position einer solchen stoffschlüssigen Verbindung 43 hervorgehoben. Dies kann z. B. eine Klebverbindung, eine Lötverbindung oder eine Schweißverbindung sein, insbesondere eine Laserschweißverbindung. Die Darstellung der Fig. 6c zeigt, dass eine Verformung der Einzelplatten 10', 10" in den Bereichen 46 beim Verpressen der Sickenanordnung 14a durch die erfindungsgemäße Ausgestaltung der Leitungskanäle 27 und durch die zusätzliche Ausbildung stoffschlüssiger Verbindungen 43 zwischen den Einzelplatten 10', 10" in den Bereichen 34 zwischen benachbarten Leitungskanälen 27 vollständig oder beinahe vollständig unterbunden werden kann.

Fig. 6b zeigt hingegen ein Beispiel, bei dem zwischen keinem der Leitungskanäle 27 eine stoffschlüssige Verbindung vorhanden ist, das Auseinanderklaffen der Einzelplatten 10', 10" wird dennoch wirksam reduziert.

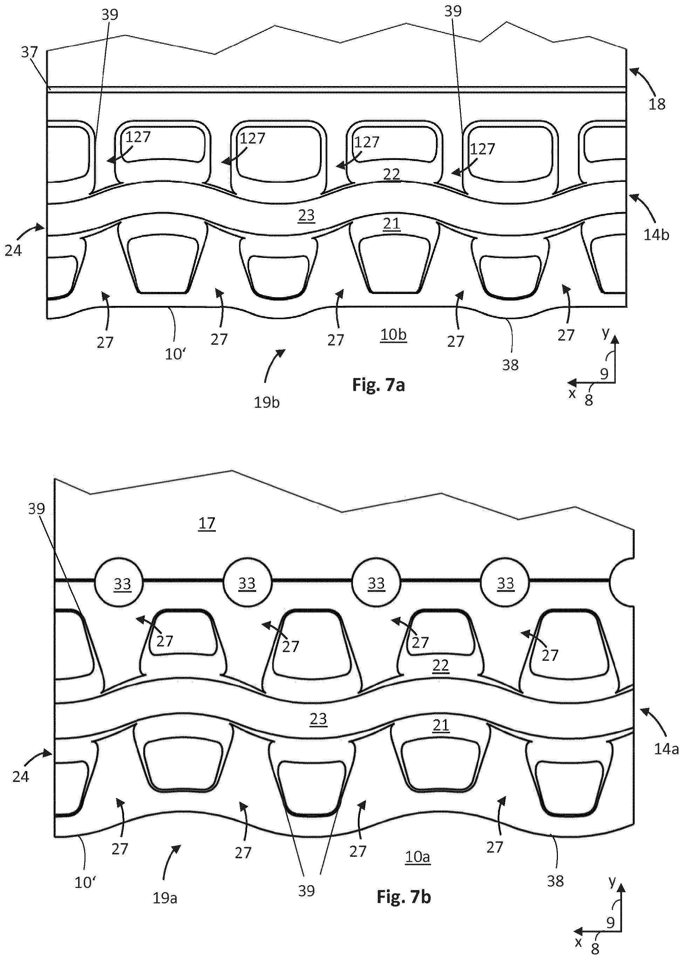

Die Fign. 7a-e zeigen wiederum abgewandelte Ausführungsformen der erfindungsgemäßen Durchführung 19a durch die Sickenanordnung 14a der Einzelplatte 10'. Die Sickendurchführung 19a gemäß den Fign. 7a-d unterscheiden sich von der Sickendurchführung 19a gemäß der Fig. 6a dadurch, dass die Sickenanordnung 14a gemäß Fig. 6a gerade verläuft, wohingegen die Sickenanordnungen 14a gemäß den Fign. 7a-e jeweils wenigstens abschnittweise einen wellenförmigen Verlauf haben, insbesondere nach Art einer Sinuskurve.

In Fig. 7a weist die Sickendurchführung 19b nur an der der Durchgangsöffnung 10b zugewandten Sickenflanke 21 erfindungsgemäße Leitungskanäle 27 auf, die sich jeweils an die Sickenflanke 21 anschließen. Nur der Übersichtlichkeit halber sind die Durchbrüche 25, 26 in den Sickenflanken 21, 22 in den Fign. 7a-d nicht gesondert hervorgehoben. In Fig. 7a sind die Leitungskanäle 27 über die Durchbrüche 25 in der Sickenflanke 21 in Fluidverbindung mit dem Sickeninnenraum 24. Die Höhe der Leitungskanäle 27 nimmt zur Sickenanordnung 14b hin abschnittweise linear zu. In demselben Maße nimmt die Breite der Leitungskanäle 27 zur Sickenanordnung 14b hin ab, so dass die Leitungskanäle im Wesentlichen einen konstanten Querschnitt aufweisen. An der von der Durchgangsöffnung 10b abgewandten Sickenflanke 22 sind dagegen Leitungskanäle 127 konstanter Höhe angeordnet, die eine Fluidverbindung zwischen dem Sickeninnenraum 24 und dem zuvor beschriebenen Hohlraum 18 zwischen den Einzelplatten 10', 10" herstellen. Jenseits der Radien 39 gehen die Leitungskanäle 27 in Fig. 7a über ein stufenförmiges Ende 37 in den Hohlraum 18 über. Zur Durchgangsöffnung 10a hin werden die Leitungskanäle 27 durch eine nur im Bereich der Wellenbäuche der Sicke vorspringende Innenkante 38 der Einzelplatte 10' begrenzt. Die Leitungskanäle sind durch diesen Verlauf der Innenkante 38 verkürzt, so dass das Auseinanderklaffen der Einzelplatten 10', 10" an der Innenkante 38 weiter reduziert wird.

Die Sickendurchführung 19a gemäß Fig. 7b unterscheidet sich von der Sickendurchführung 19b gemäß Fig. 7a insbesondere dadurch, dass an beiden Sickenflanken 21, 22 die erfindungsgemäßen Leitungskanäle 27 angeordnet sind. Die Höhe der Leitungskanäle 27 nimmt zur Sickenanordnung 14a hin abschnittweise linear zu. In demselben Maße nimmt die Breite der Leitungskanäle 27 zur Sickenanordnung 14a hin ab, so dass die Leitungskanäle im Wesentlichen einen konstanten Querschnitt aufweisen. Die Leitungskanäle 27 an der von der Durchgangsöffnung 10a abgewandten Seite der Sickenanordnung 14a weisen an ihren von der Sickenanordnung 14a abgewandten Enden jeweils einen Einlass oder Auslass in Gestalt einer Durchgangsöffnung 33 in der Einzelplatte 10' auf. Über diese Öffnungen sind die Leitungskanäle 27 z. B. in Fluidverbindung mit dem aktiven Bereich der Einzelplatte 10'. Die Innenkante 38 der Einzelplatte 10' verläuft in Fig. 7b ebenfalls wellenförmig, wobei die Sickenanordnung 14a und die Innenkante 38 dieselbe Wellenlänge aufweisen. Die Leitungskanäle 27 sind somit alle gleich lang und ermöglichen somit homogene Verhältnisse. Während die Wellenform der Innenkante hier im Wesentlichen einer sinusförmigen Welle entspricht, ist beispielsweise auch eine periodische Aneinanderreihung trapezförmiger Innenkantenabschnitte möglich.

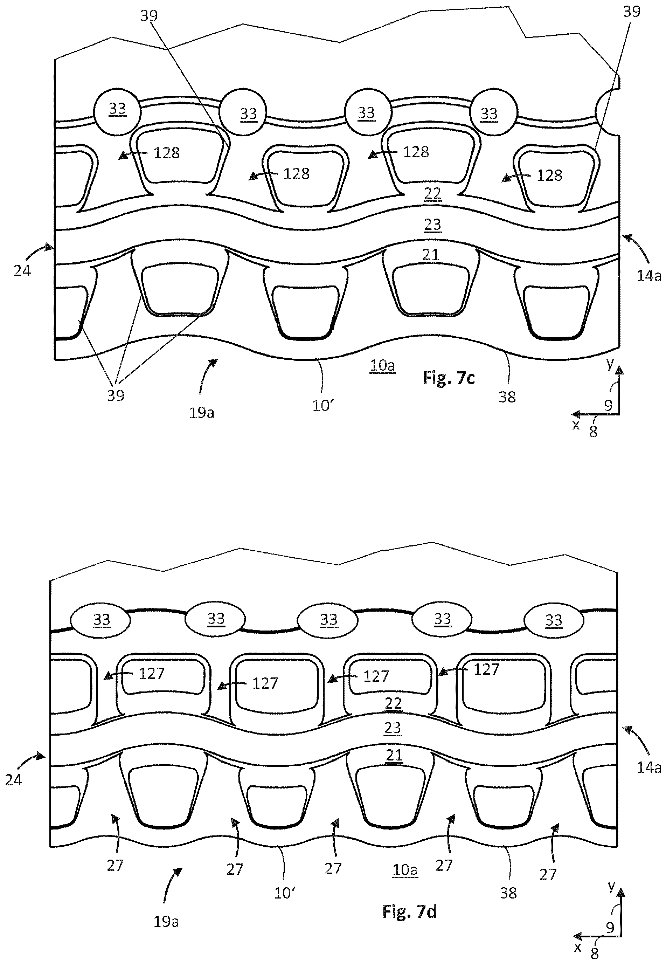

Die Sickendurchführung 19a gemäß Fig. 7c unterscheidet sich von der Sickendurchführung 19a gemäß Fig. 7b dadurch, dass an der Sickenflanke 22 Leitungskanäle 128 angeordnet sind, die sich zur Sickenanordnung 14a hin wenigstens abschnittweise fächerförmig verbreitern. In demselben Maße, wie ihre parallel zur Planflächenebene der Einzelplatte 10' bestimmte Breite zur Sickenanordnung 14a hin zunimmt, nimmt die Höhe der Leitungskanäle 128 zur Sickenanordnung 14a hin ab, so dass die Querschnittsfläche der Leitungskanäle 128 entlang ihres Verlaufs jeweils im Wesentlichen konstant ist.

Die Sickendurchführung 19a gemäß Fig. 7d unterscheidet sich von der Sickendurchführung 19a gemäß Fig. 7b dadurch, dass an der Sickenflanke 22 gerade Leitungskanäle 127 konstanter Höhe angeordnet sind. Wiederum hat die Innenkante 38 der Einzelplatte 10' einen wellenförmigen Verlauf. In Fig. 7d entspricht die Wellenlänge des wellenförmigen Verlaufs der Innenkante 38 jedoch genau der Hälfte der Wellenlänge des wellenförmigen Verlaufs der Sickenanordnung 14a. Hierdurch ergeben sich besonders kurze Leitungskanäle 27, so dass sich das Auseinanderklaffen der Einzelplatten 10', 10" im Bereich der Innenkante 38 weiter vermindert.

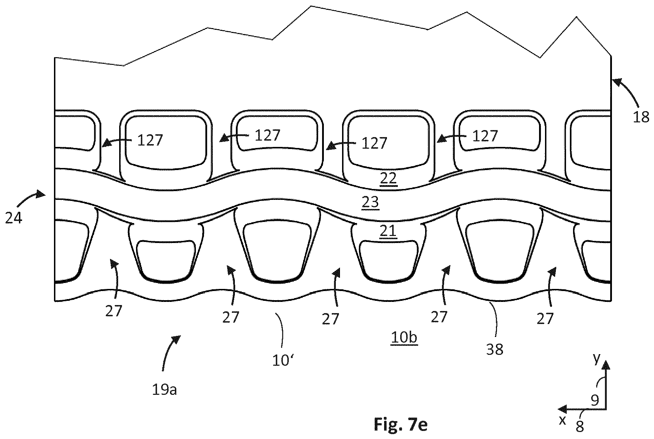

Fig. 7e zeigt eine weitere Ausführungsform, die sich von der der Fig. 7a dadurch unterscheidet, dass im Bereich des Übergangs zum Flowfield 17 oder in den Hohlraum 18 keine Stufe 37 vorgesehen ist. Der Medienübergang erfolgt unmittelbar zwischen einem Leitungskanal 127 und dem Flowfield 17. Der Rand der Durchgangsöffnung 10b ist vergleichbar dem Rand der Durchgangsöffnung 10a im Ausführungsbeispiel der Fig. 7d gestaltet.

In den Ausführungsformen der Fign. 7a-e gehen die erfindungsgemäßen Leitungskanäle 27 jeweils in den Bereichen der Wendepunkte des wellenförmigen Verlaufs der Sickenanordnung 14a in die Sickenflanken über.

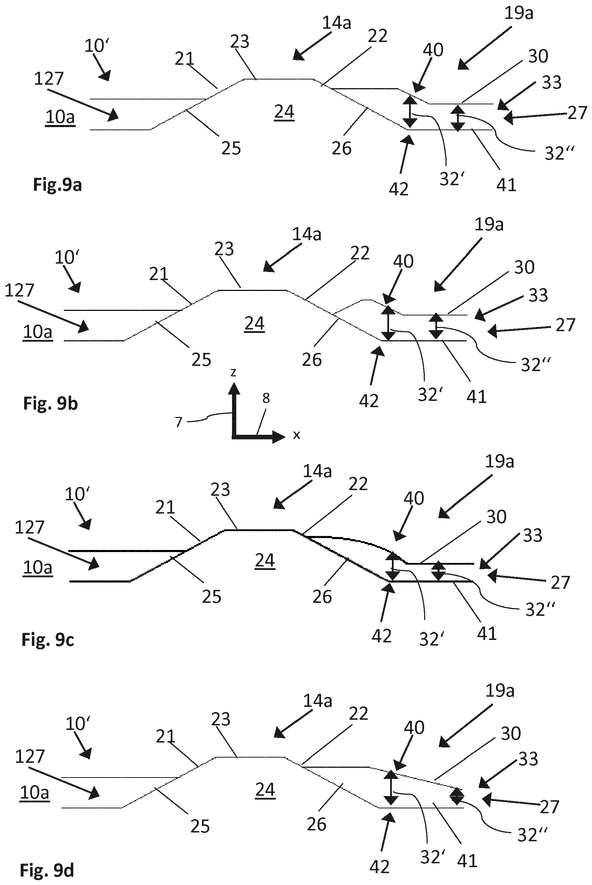

Die Fign. 8a und 8b zeigen die Sickendurchführung 19a gemäß Fig. 7b in perspektivischer Darstellung. Zusätzlich zur ersten Einzelplatte 10' ist auch die zweite Einzelplatte 10" dargestellt, die mit der ersten Einzelplatte 10' zur Separatorplatte bzw. Bipolarplatte 10 zusammengefügt ist. Zur Verdeutlichung des dreidimensionalen Aufbaus der Sickendurchführung 19a ist die Separatorplatte 10 in den Fign. 8a und 8b am unteren Bildende jeweils an unterschiedlicher Stelle aufgeschnitten. In beiden Fällen verläuft die Schnittebene senkrecht zur Planflächenebene (x-y-Ebene) der Separatorplatte 10 und im Wesentlichen senkrecht zum Verlauf der Sickenanordnung 14a. In Fig. 9a verläuft die Schnittebene am unteren Bildrand entlang der Längsrichtung zweier erfindungsgemäßer Leitungskanäle 27. In Fig. 9b dagegen verläuft die Schnittebene am unteren Bildrand im Bereich zwischen zwei benachbarten Leitungskanälen 27. Fig. 9a ist deutlich entnehmbar, dass die Durchgangsöffnung 10a und die Einlässe bzw. Auslässe 33 an den von der Sickenanordnung 14a abgewandten Enden der Leitungskanäle 27 in der jeweils oberen Bildhälfte über die Leitungskanäle 27 beiderseits der Sickenanordnung 14a, die Durchbrüche 25, 26 in den Sickenflanken 21, 22 und über den Sickeninnenraum 24 in Fluidverbindung sind.

Die Fign. 9a-d zeigen jeweils eine Schnittdarstellung verschiedener Ausführungsformen einer Sickendurchführung 19a durch die Sickenanordnung 14a, wobei die Schnittebene senkrecht zur Planflächenebene der Einzelplatte 10' und senkrecht zur Verlaufsrichtung der Sickenanordnung 14a ausgerichtet ist. Dargestellt ist jeweils die Sickenanordnung 14a mit den Sickenflanken 21, 22 und dem zwischen den Sickenflanken 21, 22 angeordneten Sickendach 23. Die Sickenflanken 21, 22 und das Sickendach 23 schließen an der der zweiten Einzelplatte 10" zugewandten Rückseite der Einzelplatte 10' einen Sickeninnenraum 24 ein. In den Sickenflanken 21, 22 sind Durchbrüche 25, 26 angeordnet, die hier durch Pfeile angedeutet sind. Der Durchbruch 25 in der Sickenflanke 21 dient dem Durchleiten eines Mediums (z. B. eines Brennstoffes, eines Reaktionsgases, eines Reaktionsproduktes oder eines Kühlmittels) durch die Sickenflanke 21. Der Durchbruch 26 in der Sickenflanke 22 dient dem Durchleiten eines Mediums durch die Sickenflanke 22.

An der linken Außenseite der Sickenanordnung 14a schließt sich an den Durchbruch 25 ein nicht erfindungsgemäßer Leitungskanal 127 an. Der Sickeninnenraum 24 ist über den Durchbruch 25 und den Leitungskanal 127 in Fluidverbindung mit der Durchgangsöffnung 10a bzw. mit dem von der Durchgangsöffnung 10a gebildeten Medienkanal. Der nicht erfindungsgemäße Leitungskanal 127 weist entlang der x-Richtung 8 eine konstante Höhe auf. An den Durchbruch 26 schließt sich an der rechten Außenseite der Sickenanordnung 14a ein erfindungsgemäßer Leitungskanal 27 an. Der Sickeninnenraum 24 ist über den Durchbruch 26 und den erfindungsgemäßen Leitungskanal 27 sowie die Öffnung 33 in einer der beiden Einzelplatten 10', 10" der Separatorplatte 10 in Fluidverbindung mit einem aktiven Bereich der Einzelplatte 10' an der Vorderseite der Einzelplatte 10'. Z. B. ist der Sickeninnenraum 24 über den Durchbruch 26 den erfindungsgemäßen Leitungskanal 27 und die Öffnung 33 in Fluidverbindung mit der zuvor beschriebenen Struktur 17 an der Vorderseite der Einzelplatte 10' (siehe Fig. 2). Bei alternativen, nicht dargestellten Ausführungsformen kann der Leitungskanal 27 ebenso eine Fluidverbindung zwischen dem Sickeninnenraum 24 und dem zuvor beschriebenen Hohlraum 18 herstellen, der zwischen den Einzelplatten 10', 10" der Separatorplatte 10 angeordnet und zum Durchführen eines Kühlmittels zwischen den Einzelplatten 10', 10" ausgebildet ist. Hier fehlt dann die Öffnung 33. Über den Leitungskanal 127, den Durchbruch 25, den Sickeninnenraum 24, den Durchbruch 26 und den Leitungskanal 27 kann somit ein Medium durch die Sickenanordnung 14a hindurch geführt werden.

Der erfindungsgemäße Leitungskanal 27 erstreckt sich jeweils von einem Einlass oder Auslass des Leitungskanals 27, der beispielsweise in Form einer Öffnung ein von der Sickenanordnung 14a abgewandtes Ende des Leitungskanals 27 bildet, bis zur Sickenflanke 22 bzw. bis zum Durchbruch 26 in der Sickenflanke 22. Sofern der Leitungskanal 27 eine Fluidverbindung zwischen dem Sickeninnenraum 24 und dem Hohlraum 18 zum Durchführen eines Kühlmittels herstellt, weist der Leitungskanal 27 an seinem von der Sickenanordnung 14a abgewandten Ende keine Durchgangsöffnung in der Einzelplatte 10' auf, da das Kühlmittel in diesem Fall gerade nicht in den aktiven Bereich an der Vorderseite der Einzelplatte 10' gelangen soll. Das von der Sickenanordnung 14a abgewandte Ende des Leitungskanals 27 kann dann z. B. durch eine stufenartige Änderung der Höhe des Leitungskanals 27 gegeben sein.

Der Leitungskanal 27 ist einteilig oder einstückig mit der Einzelplatte 10' ausgebildet. Z. B. ist der Leitungskanal 27 in die Einzelplatte 10' eingeformt, insbesondere eingeprägt. Gewöhnlich sind sowohl die Sickenanordnung 14a als auch der Leitungskanal 27 einstückig mit der Einzelplatte 10' ausgebildet und in diese eingeprägt. Auch der Leitungskanal 127 ist einstückig mit der Einzelplatte 10' ausgebildet und in diese eingeprägt.

Der erfindungsgemäße Leitungskanal 27 unterscheidet sich von dem nicht erfindungsgemäßen Leitungskanal 127 dadurch, dass eine Höhe des erfindungsgemäßen Leitungskanals 27 zur Sickenanordnung 14a hin wenigstens abschnittweise zunimmt. Die Höhe des Leitungskanals 27 ist durch den Abstand des Kanaldaches 30 des Leitungskanals 27 von der Planflächenebene 41 der Einzelplatte 10' gegeben. In den Ausführungsbeispielen der Fign. 9a-d sind jeweils eine erste Höhe 32' des Leitungskanals 27 im Bereich eines Fußes 42 der Sickenflanke 22 und eine zweite Höhe 32" des Leitungskanals 27 im Bereich des von der Sickenanordnung 14a abgewandten Endes des Leitungskanals 27, das hier von einer Öffnung 33 in einer der Einzelplatten gebildet wird, hervorgehoben. Die zweite Höhe 32" ist jeweils geringer als die erste Höhe 32'. Die erste Höhe 32' des Leitungskanals 27 wird in einem ersten Abstand von der Sickenanordnung 14a bestimmt. Die zweite Höhe 32"des Leitungskanals 27 wird in einem zweiten Abstand von der Sickenanordnung 14a bestimmt. Der erste Abstand ist jeweils kleiner als der zweite Abstand. Der Abstand zur Sickenanordnung 14a ist dabei z. B. jeweils durch den kürzesten Abstand zum Fuß 42 der Sickenflanke 22 oder durch den kürzesten Abstand vom Sickendach 23 gegeben.

In den Ausführungsbeispielen der Fign. 9a-d nimmt die Höhe des Leitungskanals 27 von dem der Sickenanordnung 14a abgewandten Ende des Leitungskanals 27 bis zum Sickenfuß 42 jeweils monoton zu. Abschnittweise nimmt die Höhe des Leitungskanals 27 bis zum Sickenfuß 42 streng monoton zu, insbesondere in einem Abschnitt 40. In den Fign. 9a, 9b und 9d nimmt die Höhe des Leitungskanals 27 zur Sickenanordnung 14a hin im Abschnitt 40 linear zu. In der Fig. 9c ist das Kanaldach 30 des Leitungskanals 27 im Abschnitt 40 in Richtung auf die Sickenanordnung 14a zu konvex gewölbt. Die Höhe 32' des Leitungskanals 27 am Sickenfuß 42 ist jeweils wenigstens 10 Prozent oder wenigstens 20 Prozent größer als die Höhe 32" am von der Sickenanordnung 14a abgewandten Ende 33 des Leitungskanals 27.

Der Durchbruch 26 in der Sickenflanke 22, an dem der Leitungskanal 27 in die Sickenflanke 22 übergeht, reicht senkrecht zur Planflächenebene 41 der Einzelplatte 10', in den Fign. 9a-d also entlang der z-Richtung 7, jeweils bis zu einer Höhe, die höchstens 90 Prozent, vorzugsweise höchstens 85 Prozent der Höhe der Sickenanordnung 14a im unverpressten Zustand beträgt. Die Höhe der Sickenanordnung 14a ist dabei durch den Abstand des Sickendaches 23 von der Planflächenebene 41 der Einzelplatte 10' gegeben. Der Einlass oder Auslass 33 des Leitungskanals 27 am von der Sickenanordnung 14a abgewandten Ende des Leitungskanals reicht senkrecht zur Planflächenebene 41 der Einzelplatte 10' jeweils bis zu einer Höhe, die höchstens 70 Prozent der Höhe der Sickenanordnung 14a beträgt. In den Fign. 9a-d beträgt die Höhe des Leitungskanals 27 am Ende sogar jeweils weniger als 50 Prozent der Höhe der Sickenanordnung 14a.

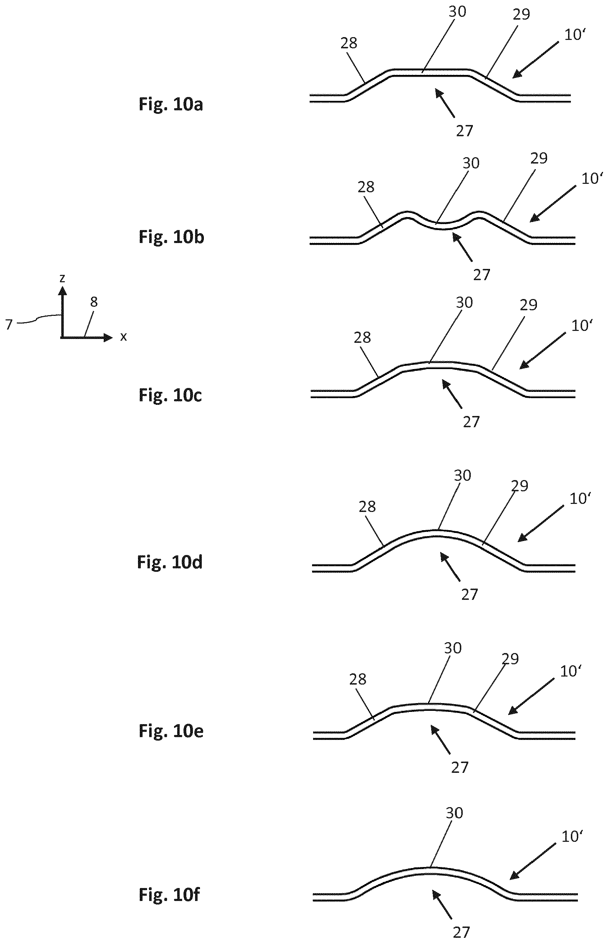

Fign. 10a-f zeigen Schnittdarstellungen verschiedener Ausführungsformen der erfindungsgemäßen Leitungskanäle 27 aus den Fign. 6 bis 8. Die Schnittebenen sind jeweils senkrecht zur Planflächenebene der Einzelplatte 10' und senkrecht zur Medienflussrichtung durch den Leitungskanal 27 ausgerichtet. Die Schnittebenen sind also jeweils derart ausgerichtet, dass sie die Querschnittsfläche des Leitungskanals 27 minimieren.

In Fig. 10a ist der Querschnitt des Leitungskanals 27 trapezartig geformt, mit geraden Seitenflanken 28, 29 und einem geraden Kanaldach 30. In Fig. 10b sind die Seitenflanken 28, 29 gerade und das Kanaldach 30 ist konkav nach innen gewölbt. In Fig. 10c sind die Seitenflanken 28, 29 gerade und das Kanaldach 30 untergliedert sich in eine Vielzahl kurzer gerader Abschnitte, so dass das Kanaldach 30 gegenüber den Seitenflanken 28, 29 abgeflacht ist. Fig. 10d zeigt gerade Seitenflanken 28, 29 und ein abgerundetes, konvex gewölbtes Kanaldach 30, wobei die Wölbung des Kanaldaches 30 glatt, d. h. ohne Kanten in die geraden Seitenflanken 28, 29 übergeht. Fig. 10d zeigt gerade Seitenflanken 28, 29 und ein konvex gewölbtes Kanaldach 30, wobei der Übergang der Wölbung des Kanaldaches 30 in die Seitenflanken 28, 29 Kanten aufweist. Fig. 10f zeigt einen vollständig abgerundeten Querschnitt. Sowohl das Kanaldach 30 also auch die Seitenflanken sind wenigstens bereichsweise konvex gewölbt und gehen ohne Kanten ineinander über.

Auch die Sickenanordnungen können grundsätzlich Querschnitte wie in den Figuren gezeigt 10a-f aufweisen. Dem Leitungskanal 27 entspricht dann der Sickeninnenraum 24, den Seitenflanken 28, 29 die Sickenflanken 21, 22 und dem Kanaldach 30 das Sickendach 23. Die Höhen und meist auch die Breiten sind im Allgemeinen bei Sicken 14 größer als bei Leitungskanälen 27.

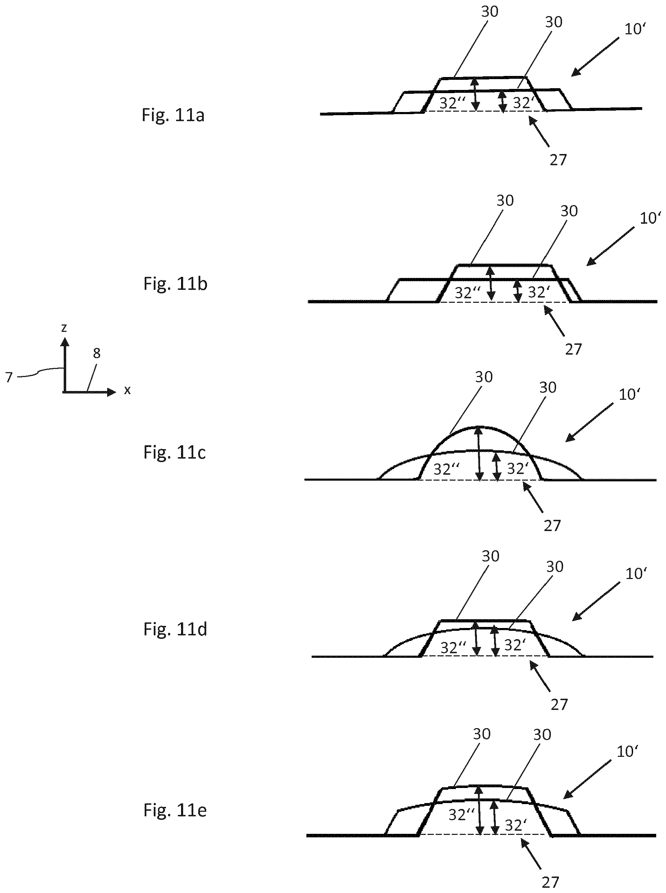

Fign. 11a-e zeigen wiederum Schnittdarstellungen verschiedener Ausführungsformen der erfindungsgemäßen Leitungskanäle 27 aus den Fign. 6-8. Die Schnittebenen sind erneut senkrecht zur Planflächenebene der Einzelplatte 10' und senkrecht zur Medienflussrichtung durch den Leitungskanal 27 ausgerichtet. Dabei zeigt jede der Fign. 11a-e zwei Schnitte desselben Leitungskanals in unterschiedlichen Abständen von der Sickenanordnung 14a. Dabei ist erkennbar, dass sich die geometrische Form des Querschnitts desselben Leitungskanals 27 entlang seiner Erstreckung verändern kann. Beispielsweise geht die Form des Querschnitts des Leitungskanals 27 in Fig. 11d von einer konvex gewölbten Form in eine trapezförmige Form über. Fig. 11b zeigt, dass die Leitungskanäle 27 asymmetrisch ausgebildet sein können.

Eingezeichnet sind ferner die größte Höhe 32" und die kleinste Höhe 32' des jeweiligen Leitungskanals 27. Nur der Übersichtlichkeit halber nicht hervorgehoben sind die zugehörigen Breiten 31", 31' des Kanals 27. Der Querschnitt mit der größeren Höhe hat jeweils einen geringeren Abstand von der Sickenanordnung 14a als der Querschnitt mit der geringeren Höhe. Den Fign. 11a-e ist somit deutlich entnehmbar, dass sich die jeweils auf halber Höhe des Leitungskanals 27 bestimmte Breite des Leitungskanals 27 zur Sickenanordnung 14a hin verringert, während sich die Höhe 32 des Leitungskanals 27 zur Sickenanordnung 14a hin vergrößert. Die Veränderung der Form des Querschnitts des Leitungskanals 27 erfolgt dabei jedoch jeweils in der Weise, dass sich die Querschnittsfläche entlang des Kanalverlaufs jeweils höchstens um 20 Prozent ändert, vorzugsweise jeweils um weniger als 10 Prozent.

## Patentansprüche

1. Separatorplatte (10) für ein elektrochemisches System (1), umfassend:
mindestens eine Durchgangsöffnung (10a-h) zur Ausbildung eines Medienkanals zur Medienzufuhr oder zur Medienableitung;
mindestens eine um die mindestens eine Durchgangsöffnung (10a-h) herum angeordnete Sickenanordnung (14a-h) zum Abdichten der Durchgangsöffnung (10a-h), wobei wenigstens eine der Flanken (21, 22) der Sickenanordnung (14a-h) wenigstens einen Durchbruch (25, 26) zum Durchleiten eines Mediums durch die Sickenflanke (21, 22) aufweist; und
mindestens einen Leitungskanal (27), der sich an einer Außenseite der Sickenanordnung (14a-h) an den Durchbruch (25, 26) in der Sickenflanke (21, 22) anschließt und der über den Durchbruch (25, 26) in der Sickenflanke (21, 22) in Fluidverbindung mit einem Sickeninnenraum (24) ist;
**dadurch gekennzeichnet,**
**dass** der Leitungskanal (27) derart ausgebildet ist, dass eine senkrecht zur Planflächenebene der Separatorplatte (10) bestimmte Höhe (32', 32") des Leitungskanals (27) zur Sickenanordnung (14a-h) hin wenigstens abschnittweise zunimmt.

2. Separatorplatte (10) nach Anspruch 1, **dadurch gekennzeichnet, dass** der Leitungskanal (27) derart ausgebildet ist, dass sich eine Querschnittsfläche des Leitungskanals (27) entlang der mittleren 25 Prozent der Erstreckung des Leitungskanals (27), vorzugsweise entlang des mittleren Drittels der Erstreckung des Leitungskanals (27) höchstens um 25 Prozent, vorzugsweise höchstens um 20 Prozent, besonders vorzugsweise höchstens um 15 Prozent ändert, wobei sich der Leitungskanal (27) von einem von der Sickenanordnung (14a-h) abgewandten Ende (33, 37, 38) des Leitungskanals (27) bis zum Durchbruch (25, 26) in der Sickenflanke (21, 22) erstreckt.

3. Separatorplatte (10) nach einem der vorhergehenden Ansprüche, **dadurch gekennzeichnet, dass** der Leitungskanal (27) derart ausgebildet ist, dass eine parallel zur Planflächenebene der Separatorplatte (10) bestimmte Breite (31', 31") des Leitungskanals (27) zur Sickenanordnung (14a-h) hin wenigstens abschnittweise abnimmt.

4. Separatorplatte (10) nach einem der vorhergehenden Ansprüche, **dadurch gekennzeichnet, dass** der Leitungskanal (27) derart ausgebildet ist, dass die Höhe (32', 32") des Leitungskanals (27) entlang des Leitungskanals (27) monoton zunimmt.

5. Separatorplatte (10) nach einem der vorhergehenden Ansprüche, **dadurch gekennzeichnet, dass** der Leitungskanal (27) derart ausgebildet ist, dass die Höhe (32', 32") des Leitungskanals (27) linear zunimmt.

6. Separatorplatte (10) nach einem der Ansprüche 3 bis 5, **dadurch gekennzeichnet, dass** der Leitungskanal (27) derart ausgebildet ist, dass die Breite (31', 31") des Leitungskanals (27) entlang des Leitungskanals (27) zumindest über die von der Sickenflanke (21, 22) entfernt liegenden 60 Prozent der Länge des Leitungskanals monoton abnimmt.

7. Separatorplatte (10) nach einem der vorhergehenden Ansprüche, **dadurch gekennzeichnet, dass** der Leitungskanal (27) derart ausgebildet ist, dass die Höhe (32', 32") des Leitungskanals (27) entlang des Leitungskanals (27) wenigstens um 10 Prozent, vorzugsweise wenigstens um 20 Prozent zunimmt.

8. Separatorplatte (10) nach einem der vorhergehenden Ansprüche, **dadurch gekennzeichnet, dass** im unverpressten Zustand der Sickenanordnung (14a-h) der Durchbruch (25, 26) in der Sickenflanke (21, 22) senkrecht zur Planflächenebene der Separatorplatte (10) bis zu einer Höhe reicht, die höchstens 90 Prozent, vorzugsweise höchstens 85 Prozent der Höhe der Sickenanordnung (14a-h) beträgt.

9. Separatorplatte (10) nach einem der vorhergehenden Ansprüche, **dadurch gekennzeichnet, dass** im unverpressten Zustand der Sickenanordnung (14a-h) der Leitungskanal (27) derart ausgebildet ist, dass ein Einlass oder Auslass des Leitungskanals (27), der ein von der Sickenanordnung (14a-h) abgewandtes Ende (33, 37, 38) des Leitungskanals (27) bildet, senkrecht zur Planflächenebene der Separatorplatte (10) bis zu einer Höhe reicht, die höchstens 80 Prozent, vorzugsweise höchstens 70 Prozent der Höhe (32', 32") der Sickenanordnung (14a-h) beträgt.

10. Separatorplatte (10) nach einem der vorhergehenden Ansprüche, **dadurch gekennzeichnet, dass** der Leitungskanal (27) derart ausgebildet ist, dass ein Dach (30) des Leitungskanals (27) zur Sickenanordnung (14a-h) hin zumindest abschnittsweise eine konvexe Wölbung aufweist.

11. Separatorplatte (10) nach einem der vorhergehenden Ansprüche, **dadurch gekennzeichnet, dass** die Separatorplatte (10) als Bipolarplatte mit zwei miteinander verbundenen Einzelplatten (10', 10") ausgebildet ist, wobei die Sickenanordnung (14a-h) und der Leitungskanal (27) in wenigstens einer der Einzelplatten (10', 10") ausgebildet sind.

12. Separatorplatte (10) nach Anspruch 11, **dadurch gekennzeichnet, dass** die Einzelplatten (10', 10") einen Hohlraum (18) zum Durchführen eines Kühlmittels einschließen, wobei der Hohlraum (18) zum Durchführen eines Kühlmittels mit dem Sickeninnenraum (24) in Fluidkommunikation steht.

13. Separatorplatte (10) nach einem der vorhergehenden Ansprüche, **dadurch gekennzeichnet, dass** mindestens eine der Einzelplatten (10', 10") auf ihrer von der anderen Einzelplatte abgewandten Oberfläche eine Struktur (17) zur Führung von Reaktionsmedium aufweist, wobei die Struktur (17) zur Führung von Reaktionsmedium über mindestens einen Einlass oder Auslass des Leitungskanals (27) in Gestalt einer Öffnung in der Einzelplatte (10') mit dem Sickeninnenraum (24) in fluidischer Kommunikation steht.

14. Separatorplatte (10) nach einem der vorhergehenden Ansprüche, **dadurch gekennzeichnet, dass** der Durchbruch (25, 26) und der Leitungskanal (27) an einer von der Durchgangsöffnung (10a-h) der Separatorplatte (10) abgewandten und/oder an einer der Durchgangsöffnung (10a-h) der Separatorplatte (10) zugewandten Flanke der Sickenanordnung (14a-h) angeordnet sind.

15. Elektrochemisches System (1), insbesondere Brennstoffzellensystem, elektrochemischer Kompressor, Befeuchter für ein Brennstoffzellensystem oder Elektrolyseur mit einer Vielzahl von Separatorplatten (10, 11) nach einem der Ansprüche 1 bis 14, wobei die Durchgangsöffnungen (10a-h) der Separatorplatten (10, 11) wenigstens einen Medienkanal zur Medienzufuhr oder zur Medienableitung bilden.

## Claims

1. A separator plate (10) for an electrochemical system (1), comprising:
at least one passage opening (10a-h) for forming a media channel for feeding or discharging media;
at least one bead arrangement (14a-h) arranged around the at least one passage opening (10a-h), for the purpose of sealing said passage opening (10a-h), wherein at least one of the flanks (21, 22) of the bead arrangement (14a-h) comprises at least one opening (25, 26) for conducting a medium through the bead flank (21, 22); and
at least one guide channel (27), which is connected, on an exterior of the bead arrangement (14a-h), to the opening (25, 26) in the bead flank (21, 22) and is fluidically connected to a bead interior (24) via the opening (25, 26) in the bead flank (21, 22);
**characterised in that**
the guide channel (27) is designed such that a guide channel (27) height (32', 32") perpendicular to the flat surface plane of the separator plate (10) increases in the direction of the bead arrangement (14a-h) at least in sections.

2. The separator plate (10) according to claim 1, **characterised in that** the guide channel (27) is designed such that a cross-sectional area of the guide channel (27) along the middle 25% of the extent of the guide channel (27), preferably along the middle third of the extent of the guide channel (27), changes by 25% at most, preferably by 20% at most, particularly preferably by 15% at most, wherein the guide channel (27) extends from an end (33, 37, 38) of the guide channel (27) facing away from the bead arrangement (14a-h) to the opening (25, 26) in the bead flank (21, 22).

3. The separator plate (10) according to either one of the preceding claims, **characterised in that** the guide channel (27) is designed such that a width (31', 31") of the guide channel (27) defined parallel to the flat surface plane of the separator plate (10) decreases in the direction of the bead arrangement (14a-h) at least in sections.

4. The separator plate (10) according to any one of the preceding claims, **characterised in that** the guide channel (27) is designed such that the height (32', 32") of the guide channel (27) increases monotonically along the guide channel (27).

5. The separator plate (10) according to any one of the preceding claims, **characterised in that** the guide channel (27) is designed such that the height (32', 32") of the guide channel (27) increases linearly.

6. The separator plate (10) according to any one of claims 3 to 5, **characterised in that** the guide channel (27) is designed such that the width (31', 31") of the guide channel (27) decreases monotonically along the guide channel (27) at least over the 60% of the length of the guide channel arranged at a distance from the bead flank (21, 22).

7. The separator plate (10) according to any one of the preceding claims, **characterised in that** the guide channel (27) is designed such that the height (32', 32") of the guide channel (27) increases along the guide channel (27) at least by 10%, preferably at least by 20%.

8. The separator plate (10) according to any one of the preceding claims, **characterised in that**, in the uncompressed state of the bead arrangement (14a-h), the opening (25, 26) in the bead flank (21, 22) reaches, perpendicularly to the flat surface plane of the separator plate (10), as far as a height that is at most 90%, preferably at most 85% of the height of the bead arrangement (14a-h).

9. The separator plate (10) according to any one of the preceding claims, **characterised in that**, in the uncompressed state of the bead arrangement (14a-h), the guide channel (27) is designed such that an inlet or outlet of the guide channel (27), which forms an end (33, 37, 38) of the guide channel (27) facing away from the bead arrangement (14a-h), reaches, perpendicularly to the flat surface plane of the separator plate (10), as far as a height that is at most 80%, preferably at most 70% of the height (32', 32") of the bead arrangement (14a-h).

10. The separator plate (10) according to any one of the preceding claims, **characterised in that** the guide channel (27) is designed such that a roof (30) of the guide channel (27) has a convex curvature in the direction of the bead arrangement (14a-h), at least in sections.

11. The separator plate (10) according to any one of the preceding claims, **characterised in that** the separator plate (10) is formed as a bipolar plate with two individual plates (10', 10") connected to one another, wherein the bead arrangement (14a-h) and the guide channel (27) are formed in at least one of the individual plates (10', 10").

12. The separator plate (10) according to claim 11, **characterised in that** the individual plates (10', 10") enclose a hollow space (18) for the passage of a coolant, wherein the hollow space (18) for passage of a coolant is in fluid communication with the bead interior (24).

13. The separator plate (10) according to any one of the preceding claims, **characterised in that** at least one of the individual plates (10', 10") has a structure (17) on its surface facing away from the other individual plate for guiding reaction medium, wherein the structure (17) for guiding reaction medium is in fluidic communication with the bead interior (24) via at least one inlet or outlet of the guide channel (27) in the form of an opening in the individual plate (10').

14. The separator plate (10) according to any one of the preceding claims, **characterised in that** the opening (25, 26) and the guide channel (27) are arranged on a flank of the bead arrangement (14a-h) facing away from the passage opening (10a-h) of the separator plate (10) and/or on a flank of the bead arrangement (14a-h) facing in the direction of the passage opening (10a-h) of the separator plate (10).

15. An electrochemical system (1), in particular a fuel cell system, electrochemical compressor, humidifier for a fuel cell system, or electrolyser, comprising a plurality of separator plates (10, 11) according to any one of claims 1 to 14, wherein the passage openings (10a-h) of the separator plates (10, 11) form at least one media channel for feeding or discharging media.

## Revendications

1. Plaque de séparateur (10) pour un système électrochimique (1), comprenant :
au moins une ouverture de passage (10a-h) pour la réalisation d'un canal de fluide pour l'introduction du fluide ou pour la dérivation du fluide ;
au moins un arrangement de nervures (14a-h) disposées autour de l'au moins une ouverture de passage (10a-h) pour l'étanchéification de l'ouverture de passage (10a-h), au moins un des flancs (21, 22) de l'arrangement de nervures (14a-h) comprenant au moins une percée (25, 26) pour le passage d'un fluide à travers le flanc de nervure (21, 22) ; et
au moins un canal de guidage (27) qui se raccorde à un côté externe de l'arrangement de nervures (14a-h) au niveau de la percée (25, 26) dans le flanc de nervure (21, 22) et qui est en liaison fluidique avec un espace interne de la nervure (24) par l'intermédiaire de la percée (25, 26) dans le flanc de nervure (21, 22) ;
**caractérisée en ce que**
le canal de guidage (27) est conçu de façon à ce qu'une hauteur (32', 32") déterminée du canal de guidage (27), perpendiculaire au plan de surface plane de la plaque de séparateur (10) augmente au moins à certains endroits en direction de l'arrangement de nervures (14a-h).

2. Plaque de séparateur (10) selon la revendication 1, **caractérisée en ce que** le canal de guidage (27) est conçu de façon à ce qu'une surface de section transversale du canal de guidage (27) varie le long des 25 % centraux de l'extension du canal de guidage (27), de préférence le long du tiers central de l'extension du canal de guidage (27), de 25 % maximum, de préférence de 20 % maximum, plus particulièrement de préférence de 15 % maximum, le canal de guidage (27) s'étendant d'une extrémité (33, 37, 38), opposée à l'arrangement de nervures (14a-h), du canal de guidage (27) jusqu'à la percée (25, 26) dans le flanc de la nervure (21, 22).

3. Plaque de séparateur (10) selon l'une des revendications précédentes, **caractérisée en ce que** le canal de guidage (27) est conçu de façon à ce que la largeur (31', 31") déterminée du canal de guidage (27), parallèle au plan de surface plane de la plaque de séparateur (10), diminue au moins à certains endroits en direction de l'arrangement de nervures (14a-h).

4. Plaque de séparateur (10) selon l'une des revendications précédentes, **caractérisée en ce que** le canal de guidage (27) est conçu de façon à ce que la hauteur (32', 32") du canal de guidage (27) augmente de manière monotone le long du canal de guidage (27).

5. Plaque de séparateur (10) selon l'une des revendications précédentes, **caractérisée en ce que** le canal de guidage (27) est conçu de façon à ce que la hauteur (32', 32") du canal de guidage (27) augmente de manière linéaire.

6. Plaque de séparateur (10) selon l'une des revendications 3 à 5, **caractérisée en ce que** le canal de guidage (27) est conçu de façon à ce que la largeur (31', 31") du canal de guidage (27) diminue de manière monotone le long du canal de guidage (27) au moins sur les 60 % éloignés du flanc de la nervure (21, 22), de la longueur du canal de guidage.

7. Plaque de séparateur (10) selon l'une des revendications précédentes,, **caractérisée en ce que** le canal de guidage (27) est conçu de façon à ce que la hauteur (32', 32") du canal de guidage (27) augmente le long du canal de guidage (27) d'au moins 10 %, de préférence d'au moins 20 %.

8. Plaque de séparateur (10) selon l'une des revendications précédentes,, **caractérisée en ce que**, dans l'état non compressé de l'arrangement de nervures (14a-h), la percée (25, 26) dans le flanc de nervure (21, 22) arrive, perpendiculairement au plan de surface plane de la plaque de séparateur (10), jusqu'à une hauteur qui représente 90 % maximum, de préférence 85 % maximum de la hauteur de l'arrangement de nervures (14a-h).

9. Plaque de séparateur (10) selon l'une des revendications précédentes, **caractérisée en ce que**, dans l'état non compressé de l'arrangement de nervures (14a-h), le canal de guidage (27) est conçu de façon à ce qu'une entrée ou une sortie du canal de guidage (27), qui forme une extrémité (33, 37, 38), opposée à l'arrangement de nervures (14a-h), du canal de guidage (27), arrive, perpendiculairement au plan de surface plane de la plaque de séparateur (10), jusqu'à une hauteur qui représente 80 % maximum, de préférence 70 % maximum, de la hauteur (32', 32") de l'arrangement de nervures (14a-h).

10. Plaque de séparateur (10) selon l'une des revendications précédentes, **caractérisée en ce que** le canal de guidage (27) est conçu de façon à ce qu'un toit (30) du canal de guidage (27) présente au moins à certains endroits une courbure convexe en direction de l'arrangement de nervures (14a-h).

11. Plaque de séparateur (10) selon l'une des revendications précédentes, **caractérisée en ce que** la plaque de séparateur (10) est conçue comme une plaque bipolaire avec deux plaques individuelles (10', 10") reliées entre elles, l'arrangement de nervures (14a-h) et le canal de guidage (27) étant disposés dans au moins une des plaques individuelles (10', 10").

12. Plaque de séparateur (10) selon la revendication 11, **caractérisée en ce que** les plaques individuelles (10', 10") incluent une cavité (18) pour le passage d'un fluide de refroidissement, la cavité (18) étant communication fluidique avec l'intérieur de la nervure (24) pour le passage d'un fluide de refroidissement.

13. Plaque de séparateur (10) selon l'une des revendications précédentes, **caractérisée en ce qu'**au moins une des plaques individuelles (10', 10") comprend, sur sa surface opposée à l'autre plaque individuelle, une structure (17) pour le guidage d'un fluide de réaction, la structure (17) pour le guidage d'un fluide de réaction étant en communication fluidique avec l'intérieur de la nervure (24) par l'intermédiaire d'au moins une entrée ou une sortie du canal de guidage (27) sous la forme d'une ouverture dans la plaque individuelle (10').

14. Plaque de séparateur (10) selon l'une des revendications précédentes, **caractérisée en ce que** la percée (25, 26) et le canal de guidage (27) sont disposés au niveau d'un flanc, opposé à l'ouverture de passage (10a-h) de la plaque de séparateur (10) et/ou orienté vers l'ouverture de passage (10a-h) de la plaque de séparateur (10), de l'arrangement de nervures (14a-h).

15. Système électrochimique (1), plus particulièrement système de cellule à combustible, compresseur électrochimique, humidificateur pour un système de cellule à combustible ou électrolyseur avec une pluralité de plaques de séparateur (10, 11) selon l'une des revendications 1 à 14, les ouvertures de passage (10a-h) des plaques de séparateur (10, 11) comprenant au moins un canal de fluide pour l'introduction du fluide ou pour la dérivation du fluide.
